# EUROPEAN PATENT SPECIFICATION

(11) **EP 4 339 605 B1**
(45) Date of publication and mention of the grant of the patent: **11.11.2026**
(21) Application number: 23197502.0
(22) Date of filing: 14.09.2023
(51) Int. Cl.: G01N 29/024, G01N 29/032, G01N 29/44, G01F 23/296

(54) **MEASUREMENT APPARATUS AND MEASUREMENT METHOD**
MESSVORRICHTUNG UND MESSVERFAHREN
APPAREIL DE MESURE ET PROCÉDÉ DE MESURE

(30) Priority: 14.09.2022 JP 2022146571; 28.08.2023 JP 2023138393
(43) Date of publication of application: 20.03.2024
(73) Proprietor: Yokogawa Electric Corporation, Tokyo 180-8750 (JP)
(72) Inventor: ITOU, Rai, Musashino-shi, Tokyo, 180-8750 (JP)
(74) Representative: Stöckeler, Ferdinand

(56) References cited:
- US-A1- 2004 139 792
- US-A1- 2021 205 772
- US-B1- 6 959 589
- US-B2- 10 794 865
- US-B2- 7 140 239
- US-B2- 8 850 882

## Description

### CROSS-REFERENCE TO RELATED APPLICATION

The present application claims priority to and the benefit of Japanese Patent Application No. 2022-146571 filed September 14, 2022.

### TECHNICAL FIELD

The present disclosure relates to a measurement apparatus and a measurement method.

### BACKGROUND

Technology related to stirring for mixing objects in liquids is conventionally known. For example, JP 2021-137196 A describes a thickening support system and a stirrer that facilitate achieving a desired thickening.

US 6 959 589 B1 discloses an autoclave reactor that allows for the ultrasonic analysis of slurry concentration and particle size distribution. US 2021/ 205 772 A1 discloses a method of determining a mixing state of a medium in a container, US 2004 / 139 792 A1 discloses a method and apparatus for determining the composition of a containerized material, typically a suspension, through which ultrasonic waves are passed. US 7 140 239 B2 discloses a system for determining properties of settling suspensions. US 10 794 865 B2 discloses an apparatus and method for the separation of an oil-water mixture into its components. US 8 850 882 B2 discloses a non-intrusive method to determine the fluid level in a vessel.

### SUMMARY

### (Technical Problem)

However, conventional technology has not adequately considered the point of quantitatively measuring the state of a liquid used in stirring and the like by sensing other than sensing a specific physical quantity, during stirring in the container, and without opening a lid of a container.

It would be helpful to provide a measurement apparatus and a measurement method able to more easily measure the state of a liquid.

### (Solution to Problem)

The scope of protection is defined by the appended claims.

### (Advantageous Effect)

According to the present disclosure, a measurement apparatus according to claim 1 and a measurement method according to claim 9 are provided that more easily measure a state of a liquid.

### BRIEF DESCRIPTION OF THE DRAWINGS

In the accompanying drawings:
FIG. 1 is a schematic diagram illustrating a schematic configuration of a measurement apparatus according to an embodiment of the present disclosure;
FIG. 2 is a functional block diagram illustrating a schematic configuration of the measurement apparatus illustrated in FIG. 1;
FIG. 3A is a graph illustrating example 1 of a detection signal from a detector;
FIG. 3B is a graph illustrating example 2 of a detection signal from a detector;
FIG. 3C is a graph illustrating example 3 of a detection signal from a detector;
FIG. 3D is a graph illustrating example 4 of a detection signal from a detector;
FIG. 4A is a graph illustrating example 5 of a detection signal from a detector;
FIG. 4B is a graph illustrating example 6 of a detection signal from a detector;
FIG. 4C is a graph illustrating example 7 of a detection signal from a detector;
FIG. 4D is a graph illustrating example 8 of a detection signal from a detector;
FIG. 5 is a flowchart for explanation of example 1 of operation of the measurement apparatus illustrated in FIG. 1;
FIG. 6 is a flowchart for explanation of example 2 of operation of the measurement apparatus illustrated in FIG. 1;
FIG. 7 is a schematic diagram illustrating an example of detection signals when a container is empty;
FIG. 8 is a schematic diagram illustrating an example 1 of detection signals when a container is not empty;
FIG. 9 is a schematic diagram illustrating an example 2 of detection signals when a container is not empty;
FIG. 10 is a schematic diagram illustrating an example 3 of detection signals when a container is not empty;
FIG. 11 is a schematic diagram illustrating an example 4 of detection signals when a container is not empty;
FIG. 12 is a flowchart for explanation of example 3 of operation of the measurement apparatus illustrated in FIG. 1;
FIG. 13 is a schematic diagram for explanation of example 3 of operation of the measurement apparatus illustrated in FIG. 1;
FIG. 14 is a flowchart for explanation of example 4 of operation of the measurement apparatus illustrated in FIG. 1;
FIG. 15 is a schematic diagram for explanation of a calculation method for calculating the speed of sound in a liquid;
FIG. 16 is a schematic diagram illustrating Variation 1 of the measurement apparatus illustrated in FIG. 1;
FIG. 17 is a schematic diagram illustrating Variation 2 of the measurement apparatus illustrated in FIG. 1;
FIG. 18 is a schematic diagram illustrating Variation 3 of the measurement apparatus illustrated in FIG. 1;
FIG. 19 is a schematic diagram illustrating Variation 4 of the measurement apparatus illustrated in FIG. 1;
FIG. 20 is a schematic diagram illustrating Variation 5 of the measurement apparatus illustrated in FIG. 1;
FIG. 21 is a schematic diagram illustrating Variation 6 of the measurement apparatus illustrated in FIG. 1;
FIG. 22 is a schematic diagram illustrating Variation 7 of the measurement apparatus illustrated in FIG. 1; and
FIG. 23 is a graph illustrating an example of measurement data obtained by the measurement apparatus illustrated in FIG. 22.

### DETAILED DESCRIPTION

Background and problems of conventional technology are described in more detail.

A stirrer used to mix an object into a liquid has, as main components, a motor, a stirring shaft, stirrer blades, a lid, and a container. The container of the stirrer contains a mixture of the liquid as a main agent and the object to be dispersed in the liquid by stirring. The stirrer transmits rotational force from rotation of the motor to the stirrer blades via the stirring shaft, and mixes the object with the liquid by rotating the stirrer blades. Depending on the object, bubbles may be introduced by stirring. The stirrer may include a sight glass and a measurement instrument such as a thermometer, a pressure gauge, and the like installed with respect to the lid to allow a state inside the container to be checked.

Several possible methods may be considered to check whether the object is completely mixed with the liquid as the main agent. A first method is to stir for a preset time. A second method is to open the lid of the container and remove the liquid therein to check. A third method is to view the liquid in the container through the sight glass from outside the container. A fourth method is to measure the motor rotation speed and current consumption to determine whether stirring torque has reached a defined torque. A fifth method is to determine based on secondary information from inside the container, such as temperature, pressure, and the like measured by a measurement instrument.

However, none of these methods made measuring the state of the liquid from outside the container easy during stirring. For example, to check a product state of the liquid in stirring, it was necessary to stop stirring once, open the lid of the container, obtain the liquid inside the container with a ladle, and check with an external instrument. For example, according to the fourth method above, checking the product state during stirring is possible to a point, but depending on the object, the stirring torque might not change.

In addition, stirring may cause density differences in precipitate in the container and differences in the state of bubble mixing. As a result, a problem occurs that the product state of the liquid in stirring is not stable. To measure these factors, multiple detectors need to be installed.

Further, depending on stirring conditions, the position of the liquid surface inside may rise, which could dirty a sight glass on an upper surface of the lid, and could cause an attached measurement instrument, such as a thermometer, pressure gauge, and the like, to fail. Therefore, measuring the position of the liquid surface as a state of the liquid is also important, but the method of visualization from a sight glass is typically used.

In order to solve the above problems, it would be helpful to provide a measurement apparatus and a measurement method able to more easily measure the state of a liquid used in stirring, even during stirring. More specifically, it would be helpful to provide technology able to measure the state of a liquid used in stirring from outside a container without opening a lid of the container during stirring in the container, and able to quantitatively measure by sensing other than sensing a specific physical quantity.

### (Configuration)

An embodiment of the present disclosure is described below, with reference to the accompanying drawings.

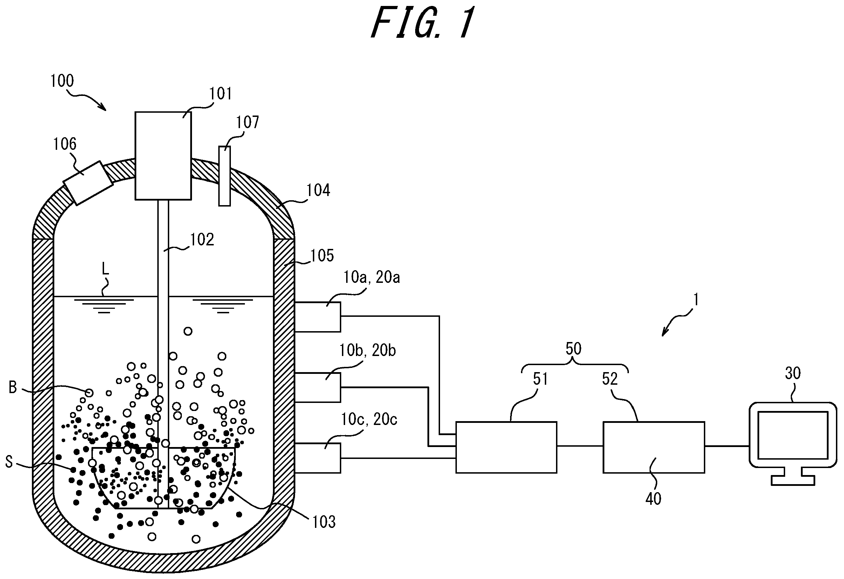

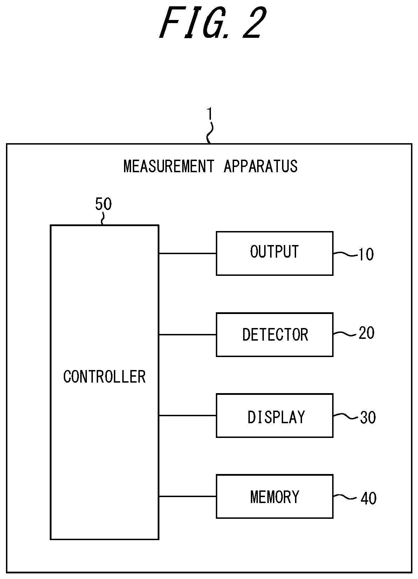

FIG. 1 is a schematic diagram illustrating a schematic configuration of a measurement apparatus 1 according to the embodiment of the present disclosure. FIG. 2 is a functional block diagram illustrating a schematic configuration of the measurement apparatus 1 illustrated in FIG. 1. First, the configuration of a stirrer 100 used to stir an object S in a liquid L is described, with reference to FIG. 1. In the present disclosure, the "object S" includes, for example, solids, liquids, gases, and the like in any state.

The stirrer 100 includes a motor 101, a stirring shaft 102, a stirrer blade 103, a lid 104, and a container 105. The liquid L as the main agent and the object S to be dispersed in the liquid L by stirring are mixed in the container 105. The container 105 stores the liquid L. The stirrer 100 transmits rotational force from rotation of the motor 101 to the stirrer blade 103 via the stirring shaft 102, and mixes the object S with the liquid L by rotation of the stirrer blade 103. Depending on the object S, bubbles B may be mixed in by the stirring.

The stirrer 100 may additionally include a sight glass 106 and a measurement instrument 107 such as a thermometer, a pressure gauge, and the like at the lid 104 to allow a state inside the container 105 to be checked.

The configuration of the measurement apparatus 1 disposed with respect to the stirrer 100 is described, with reference to FIG. 1 and FIG. 2. The measurement apparatus 1 includes outputs 10, detectors 20, a display 30, a memory 40, and a controller 50. In the example illustrated in FIG. 1, each one of the outputs 10 and each one of the detectors 20 may be used together as one module and integrally configured as one output detector. Each one of the outputs 10 and each one of the detectors 20 may be combined into one output detector as a module configuration, but may be defined as separate functional blocks in terms of function. One output detector includes one of the outputs 10 and one of the detectors 20. The output detectors are fixed to the container 105.

Each of the outputs 10 includes any ultrasonic wave output module that is fixed to the container 105. Each of the outputs 10 outputs an ultrasonic wave that propagates in the liquid L stored in the container 105. Each of the outputs 10 outputs an ultrasonic wave when a control signal, such as a square wave, a sine wave, a triangular wave, and the like, is applied from the controller 50.

Each of the detectors 20 includes any ultrasonic wave detection module that is fixed to the container 105. Each of the detectors 20 detects an ultrasonic wave output from the outputs 10 and propagated in the liquid L stored in the container 105.

The display 30 includes one or more output interfaces that output information to notify a user. For example, the display 30 includes a display that outputs information in the form of images.

The memory 40 includes any memory module, including a hard disk drive (HDD), a solid-state drive (SSD), electrically erasable programmable read-only memory (EEPROM), read-only memory (ROM), random access memory (RAM), and the like. The memory 40 functions, for example, as a main memory, auxiliary memory, or cache memory. The memory 40 is not limited to being built into the measurement apparatus 1, and may include an external storage module connected by a digital input/output port such as Universal Serial Bus (USB). The memory 40 stores any information used in operation of the measurement apparatus 1.

The controller 50 includes at least one processor. According to the present embodiment, a "processor" may be, but is not limited to, a general-purpose processor or a dedicated processor specialized for particular processing. The controller 50 measures the state of the liquid L used in stirring in the container 105 based on ultrasonic waves detected by the detectors 20.

In the present disclosure, the "state of the liquid L" includes, for example, a product state of the liquid L in stirring, the position of the liquid surface of the liquid L in the container 105, the presence or absence of the bubbles B or particles based on the object S or the like, the density the bubbles B or the particles based on the object S or the like, density of the liquid L being stirred, viscosity of the liquid L, and the like. Here, "product state" includes, for example, a degree of mixing of the object S with the liquid L, and the like.

Referring to FIG. 1, the measurement apparatus 1 is disposed with respect to the container 105 used for stirring of the object S in the liquid L. The pairs of the outputs 10 and the detectors 20 of the measurement apparatus 1 are disposed along an outer surface of the container 105. The measurement apparatus 1 includes, for example, three pairs of the outputs 10 and the detectors 20. An output 10a and a detector 20a are disposed at an upper level along the outer surface of the container 105. An output 10b and a detector 20b are disposed at a middle level along the outer surface of the container 105. An output 10c and a detector 20c are disposed at a lower level along the outer surface of the container 105.

The controller 50 includes control circuitry 51 that controls operation of the pairs of the outputs 10 and the detectors 20. The control circuitry 51 controls output of ultrasonic waves by the outputs 10. The control circuitry 51 controls detection of ultrasonic waves by the detectors 20. The controller 50 includes an information processing terminal 52 connected to the control circuitry 51. The information processing terminal 52 is a general-purpose electronic device, such as a personal computer (PC), tablet PC, smartphone, and the like, or any other small device capable of wireless transmission.

Each of the pairs of the outputs 10 and the detectors 20 output and detect ultrasonic waves based on control by the controller 50. Ultrasonic waves are generated by the control circuitry 51 transmitting control signals to the outputs 10 to output ultrasonic waves, which then propagate through the interior of the container 105. Propagated ultrasonic waves are reflected at a wall of the container 105. When the liquid L is stored in the container 105, ultrasonic waves propagate through the liquid L and are reflected at the stirrer blade 103, the stirring shaft 102, and an opposite inner wall of the container 105. In addition, ultrasonic waves incident on the liquid L are reflected at the object S and the bubbles B dispersed in the liquid L.

The detectors 20 detect reflected waves of ultrasonic waves output from the paired outputs 10. The control circuitry 51 controls the detection of ultrasonic waves for each of the detectors 20. That is, a detection signal of an ultrasonic wave is obtained for each of the detectors 20.

A defined spacing is provided between the pairs of the outputs 10 and the detectors 20 fixed along the outer surface of the container 105. The memory 40 positioned at the information processing terminal 52 stores the defined spacing.

The information processing terminal 52 obtains the detection signals of ultrasonic waves from the control circuitry 51 and measures the state of the liquid L used in stirring in the container 105. The information processing terminal 52 outputs a measurement result as data via the display 30. In other words, the measurement result is displayed on the display 30, for example.

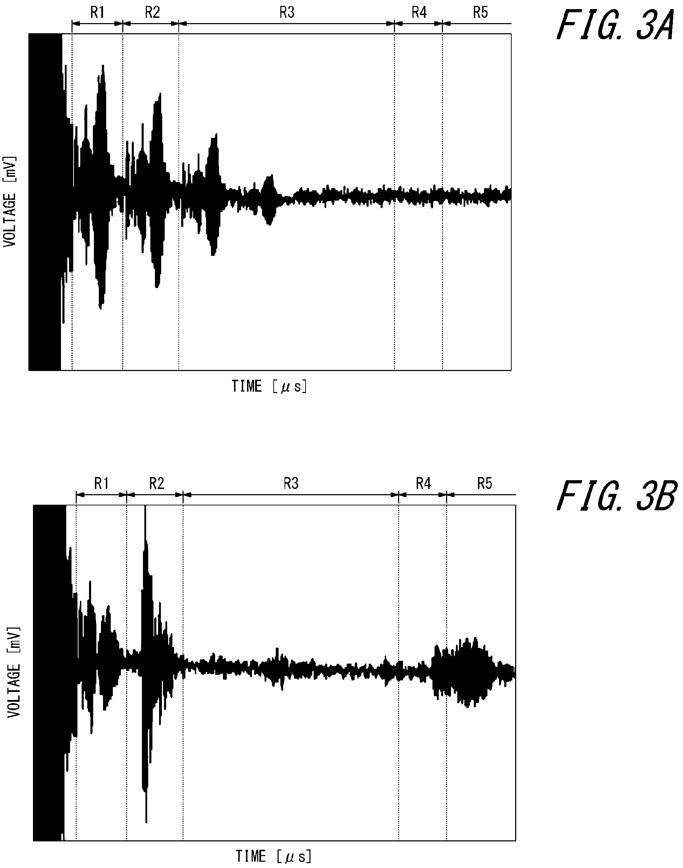

FIG. 3A is a graph illustrating example 1 of a detection signal from one of the detectors 20. FIG. 3A illustrates an example of a detection signal when the liquid L is not present in the container 105 and the container 105 is empty.

When the liquid L is not present in the container 105 and the container 105 is empty, the ultrasonic wave output from one of the outputs 10 is first reflected at an inner surface of the wall of the container 105 where the outputs 10 and the detectors 20 are disposed, and is detected as a large amplitude reflection signal in a time region R1. Most of the ultrasonic wave is reflected at the inner surface of the wall and does not enter the interior of the container 105. After first reflecting at the inner surface of the wall of the container 105, the ultrasonic wave is repeatedly reflected back and forth between the inner and outer surfaces of the wall and is detected as a repeated reflection signal that continuously decays in other time regions following the time region R1.

FIG. 3B is a graph illustrating example 2 of a detection signal from one of the detectors 20. FIG. 3B illustrates an example of a detection signal when the object S, the bubbles B, and the like are not in the container 105 and only the liquid L is stored.

When only the liquid L is present in the container 105, some of an ultrasonic wave output from one of the outputs 10 is reflected at the inner surface of the wall of the container 105 where the outputs 10 and the detectors 20 are disposed, but most of the ultrasonic wave enters the interior of the container 105 from the inner surface. The ultrasonic wave entering the interior of the container 105 is reflected at the stirrer blade 103, depending on the position of the stirrer blade 103. When the ultrasonic wave is reflected by the stirrer blade 103, the ultrasonic wave is detected as a large amplitude reflection signal in a time region R2.

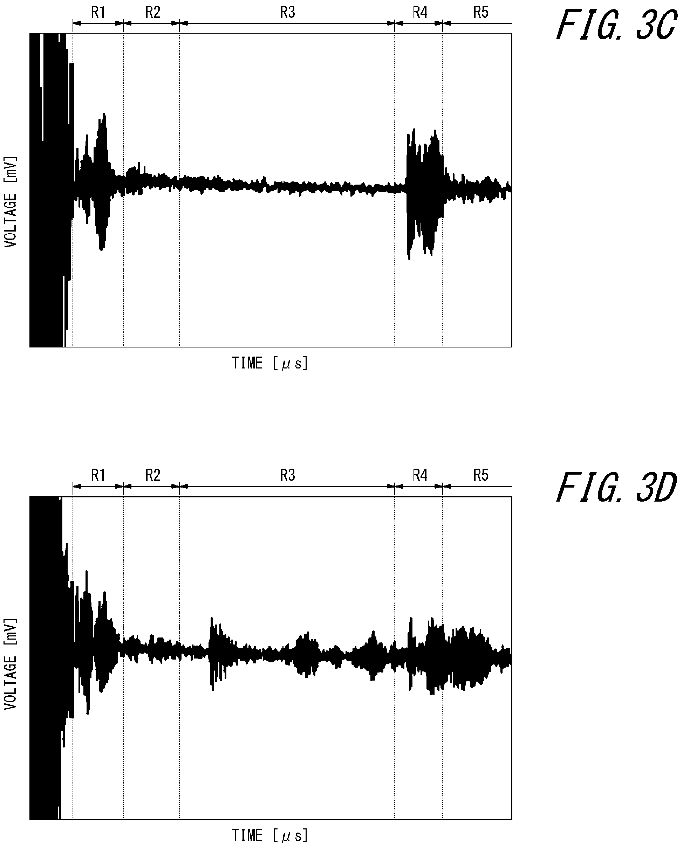

FIG. 3C is a graph illustrating example 3 of a detection signal from one of the detectors 20. FIG. 3C illustrates an example of a detection signal when the object S, the bubbles B, and the like are not present in the container 105 and only the liquid L is stored.

When only the liquid L is present in the container 105, some of an ultrasonic wave output from one of the outputs 10 is reflected at the inner surface of the wall of the container 105 where the outputs 10 and the detectors 20 are disposed, but most of the ultrasonic wave enters the interior of the container 105 from the inner surface. The ultrasonic wave entering the interior of the container 105 may be reflected at the stirring shaft 102 and not at the stirrer blade 103. When the ultrasonic wave is reflected at the stirring shaft 102, the ultrasonic wave is detected as a large amplitude reflection signal in a time region R4.

A reflection signal when the object S is completely dissolved in the liquid L has a similar trend as one of the detection signals in FIG. 3B and FIG. 3C when the object S, the bubbles B, and the like are not present in the container 105 and only the liquid L is stored.

FIG. 3D is a graph illustrating example 4 of a detection signal from one of the detectors 20. FIG. 3D illustrates an example of a detection signal when the object S, the bubbles B, and the like are present in the liquid L stored in the container 105.

When the object S, the bubbles B, and the like are present in addition to the liquid L in the container 105, an ultrasonic wave entering the interior of the container 105 from the inner surface of the wall of the container 105 where the outputs 10 and the detectors 20 are disposed is reflected at the object S, the bubbles B, and the like. When the object S precipitates at any location in the container 105, a reflection signal other than at the inner surface of the wall, for example in a range where precipitate is present, tends to be smaller in amplitude. When an ultrasonic wave is reflected at the object S, the bubbles B, and the like present in the liquid L between the inner surface of the wall described above and the stirring shaft 102, the ultrasonic wave is detected as reflection signals of small amplitude in a time region R3.

In addition, when the ultrasonic wave is reflected at the stirring shaft 102, the ultrasonic wave is detected as a reflection signal of relatively large amplitude in the time region R4. Otherwise, when the ultrasonic wave is reflected at the object S, the bubbles B, and the like present in the liquid L between the stirring shaft 102 and the inner surface of the wall opposite the wall described above, the ultrasonic wave is detected in a time region R5 as reflection signals similar to the reflection signals in the time region R3.

In FIG. 3A through FIG. 3D, only a portion of the time region R5 is illustrated. A reflection position at the inner surface of the wall opposite the wall described above is further to the right than the right edge of each graph.

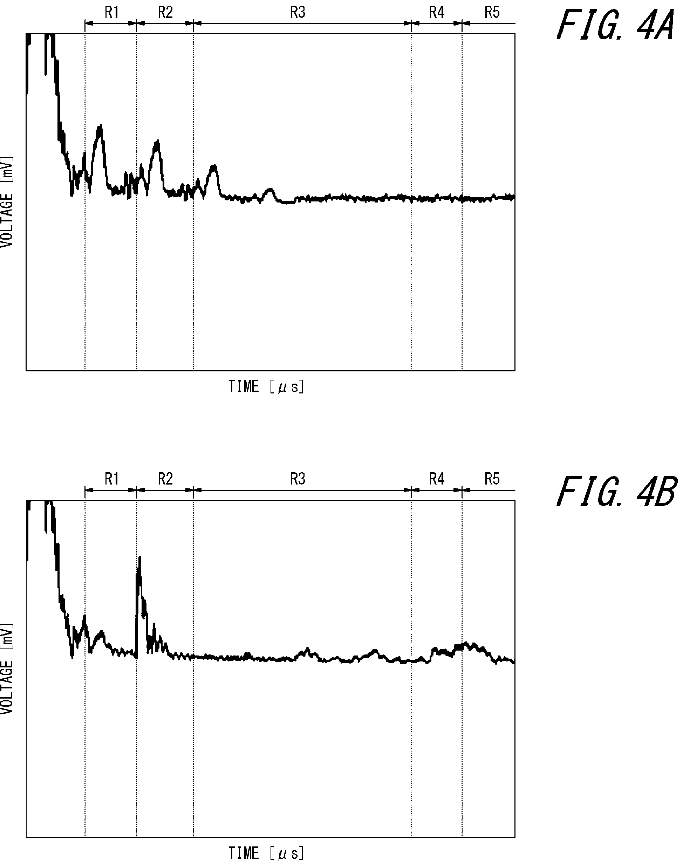

FIG. 4A is a graph illustrating example 5 of a detection signal from one of the detectors 20. FIG. 4A illustrates envelope processing performed on the detection signal illustrated in FIG. 3A as an example method of processing the detection signal.

FIG. 4B is a graph illustrating example 6 of a detection signal from one of the detectors 20. FIG. 4B illustrates envelope processing performed on the detection signal illustrated in FIG. 3B as an example method of processing the detection signal.

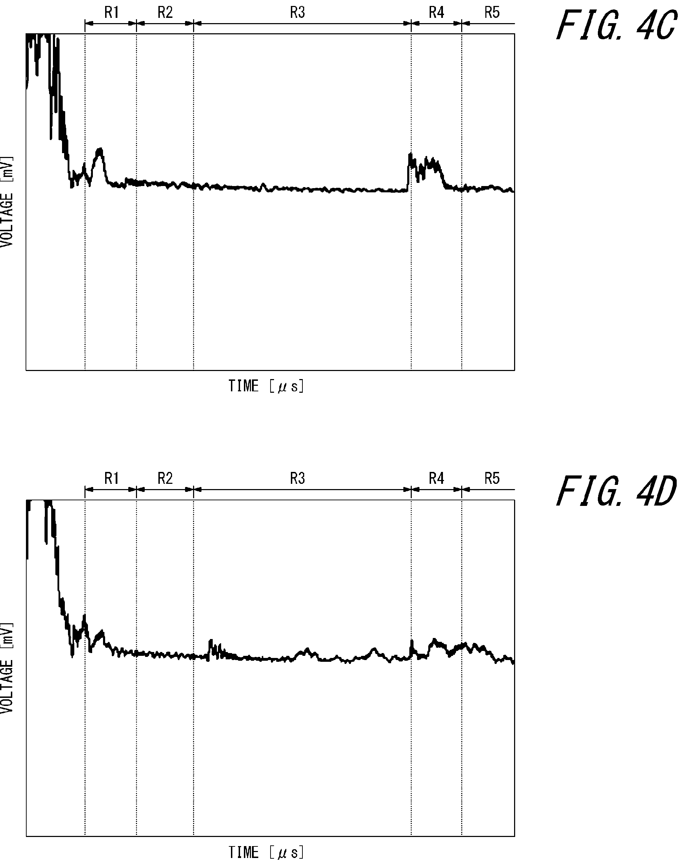

FIG. 4C is a graph illustrating example 7 of a detection signal from one of the detectors 20. FIG. 4C illustrates envelope processing performed on the detection signal illustrated in FIG. 3C as an example method of processing the detection signal.

FIG. 4D is a graph illustrating example 8 of a detection signal from one of the detectors 20. FIG. 4D illustrates envelope processing performed on the detection signal illustrated in FIG. 3D as an example method of processing the detection signal.

The controller 50 of the measurement apparatus 1 measures the state of the liquid L using waveform patterns and the like of the detection signals illustrated in FIG. 3A through FIG. 3D or FIG. 4A through FIG. 4D.

The measurement method performed by the measurement apparatus 1 is described in detail below.

### (Product state of liquid L)

The measurement apparatus 1 generates ultrasonic waves modulated at a specific output frequency in the outputs 10 and detects reflected waves reflected in the liquid L at the detectors 20. The measurement apparatus 1 obtains propagated waveform data in detection signals of ultrasonic waves mainly in the time regions R1 through R5, as illustrated in FIG. 3A through FIG. 4D. As described below, the measurement apparatus 1 measures the product state of the liquid L by comparing measurement data obtained from each of the detectors 20 with reference data obtained in an initial state before the start of stirring.

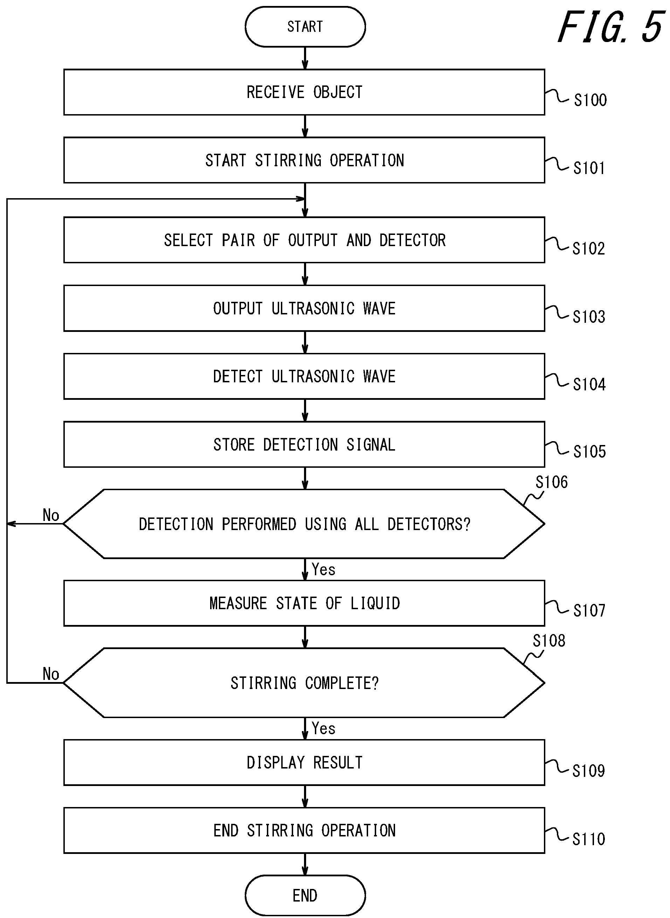

FIG. 5 is a flowchart illustrating example 1 of operation of the measurement apparatus 1 illustrated in FIG. 1. Example 1 of a measurement method performed by the measurement apparatus 1 illustrated in FIG. 1 is described with reference to FIG. 5. The flowchart illustrated in FIG. 5 illustrates a basic processing flow of the measurement method when the product state of the liquid L in stirring, among states of the liquid L, is measured using the measurement apparatus 1.

In step S100, the stirrer 100 receives into the container 105 the materials required for stirring, such as the liquid L, the object S, and the like. A user opens the lid 104 of the stirrer 100 and puts the materials required for stirring, such as the liquid L, the object S, and the like, into the container 105.

In step S101, the stirrer 100 starts the stirring operation. More specifically, the stirrer 100 operates the motor 101 to drive the stirring shaft 102 and the stirrer blade 103 at a defined rotational speed. The stirrer 100 thereby stirs the materials received in step S100 inside the container 105.

In step S102, the control circuitry 51 in the controller 50 of the measurement apparatus 1 selects a pair of the outputs 10 and the detectors 20 to be operated from among the pairs of the outputs 10 and the detectors 20.

In step S103, the control circuitry 51 in the controller 50 of the measurement apparatus 1 causes an ultrasonic wave to be output toward the interior of the container 105 using the output 10 selected in step S102. More specifically, the control circuitry 51 causes the output 10 to output an ultrasonic wave that propagates in the liquid L stored in the container 105.

In step S104, the control circuitry 51 in the controller 50 of the measurement apparatus 1 causes the ultrasonic wave to be detected using the detector 20 selected in step S102. More specifically, the control circuitry 51 causes the detector 20 to detect the ultrasonic wave propagated in the liquid L at a fixed position with respect to the container 105.

In step S105, the control circuitry 51 in the controller 50 of the measurement apparatus 1 causes a detection signal of the ultrasonic wave detected in step S104 to be stored in the memory 40 as information.

In step S106, the control circuitry 51 in the controller 50 of the measurement apparatus 1 determines whether detection has been performed using all of the detectors 20. When the controller 50 determines that detection has been performed using all of the detectors 20, the controller 50 performs the processing of step S107. For example, when the controller 50 determines that detection has been performed using all of the detectors 20 from the lower level to the upper level with respect to the three detectors 20 illustrated in FIG. 1, the controller 50 performs the processing of step S107. When the controller 50 determines that detection has not been performed using all of the detectors 20, the controller 50 performs the processing of step S102 again.

In step S107, the information processing terminal 52 included in the controller 50 of the measurement apparatus 1 measures the state of the liquid L used in stirring in the container 105 based on the ultrasonic waves detected in step S104 after determining in step S106 that detection was performed using all of the detectors 20. More specifically, the information processing terminal 52 measures the product state of the liquid L during stirring.

In step S108, the information processing terminal 52 included in the controller 50 of the measurement apparatus 1 determines whether the product state of the liquid L measured in step S107 has become a defined state and whether the stirring of the object S with respect to the liquid L is complete. In the present disclosure, the "defined state" includes, for example, a state in which the object S is completely mixed with respect to the liquid L. When the controller 50 determines that the stirring of the object S with respect to the liquid L is complete, the controller 50 performs the processing of step S109. When the controller 50 determines that the stirring of the object S with respect to the liquid L is not complete, the controller 50 returns to the processing of step S102.

In step S109, after determining that the stirring of the object S with respect to the liquid L is complete in step S108, the information processing terminal 52 included in the controller 50 of the measurement apparatus 1 causes display of a result of determination on the display 30. More specifically, the information processing terminal 52 causes display on the display 30 of visual information that the liquid L has the defined state and that the stirring of the object S with respect to the liquid L is complete.

In step S110, the stirrer 100 ends the stirring operation. More specifically, the stirrer 100 stops the operation of the motor 101 to stop the rotational operation of the stirring shaft 102 and the stirrer blade 103. Accordingly, the stirrer 100 ends stirring of the materials received in step S100 in the container 105.

The following describes processing of the controller 50 in steps S107 and S108 in more detail.

The measurement method of measuring the product state of the liquid L includes comparison with a reference. More specifically, the controller 50 measures the product state of the liquid L based on the reference data regarding the product state of the liquid L in a first reference state and the measurement data regarding the product state of the liquid L during stirring. In the present disclosure, the "first reference state" includes an initial state in which, for example, the bubbles B or the like are not present in the liquid L and the object S is not mixed at all with the liquid L after being introduced. In the product state of the liquid L in the first reference state, for example, the degree of mixing of the object S with the liquid L is zero.

The reference data includes a parameter of a reflection signal of an ultrasonic wave propagated in the liquid L in the first reference state. Such reference data includes data on ultrasonic waves detected for all of the detectors 20 and is stored in the memory 40 as a reference. In the present disclosure, the "parameter" includes at least one of, for example, the positive or negative beginning of a waveform, maximum amplitude, propagation time, speed of sound, and frequency including spectrum.

The controller 50 obtains reference data in advance as a reference, including the parameter, in the initial state of the system in which the object S for which successful mixing with the liquid L is to be checked, that is, the first reference state. For example, the controller 50 sets individual threshold values for each of the time regions R1 through R5 in FIG. 3A through FIG. 4D, and obtains the positive or negative beginning of the waveform of the reflection signal, maximum amplitude, propagation time, and speed of sound. For example, the controller 50 performs fast Fourier transform (FFT) processing with respect to each of the time regions R1 through R5 in FIG. 3A through FIG. 4D to obtain frequencies including the spectrum of the reflection signal.

At any given timing during stirring, the controller 50 again obtains similar data to the reference data as the measurement data and stores the measurement data in the memory 40. The controller 50 performs the same processing as for the reference and obtains the parameter described above even during the stirring of the liquid L. As described above, in step S107 of FIG. 5, the controller 50 performs data analysis.

The controller 50 calculates a difference of the measurement data from the reference data and determines that the stirring of the object S with respect to the liquid L is complete when the difference is constant over a defined time. When the difference is zero, the controller 50 determines that there is no change in the product state of the liquid L from the first reference state. The controller 50 determines that a normal result is achieved, that is, the stirring is complete, when the amount of change in the difference is saturated. The difference of the measured data from the reference data includes, for example, a difference with respect to at least one of the five parameters mentioned above. It suffices that the controller 50 calculates the difference for at least one of the five parameters that change between the first reference state and any state during stirring.

### (Position of liquid surface of liquid L)

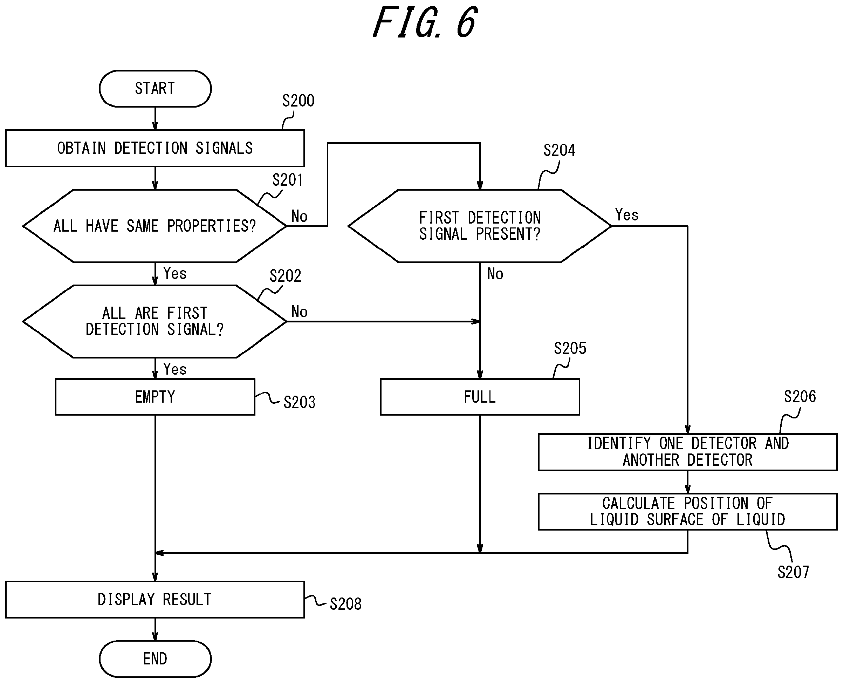

FIG. 6 is a flowchart illustrating example 2 of operation of the measurement apparatus 1 illustrated in FIG. 1. Example 2 of the measurement method performed by the measurement apparatus 1 illustrated in FIG. 1 is described with reference to FIG. 6. The flowchart illustrated in FIG. 6 illustrates a basic processing flow of the measurement method when the position of the liquid surface of the liquid L in the container 105, among states of the liquid L, is measured using the measurement apparatus 1.

The controller 50 of the measurement apparatus 1 measures the position of the liquid surface of the liquid L based on detection signals of ultrasonic waves detected by the detectors 20.

In step S200, the controller 50 of the measurement apparatus 1 obtains detection signals related to ultrasonic waves output from the outputs 10 using the detectors 20 disposed along the outer surface of the container 105. Each detection signal corresponds to one illustrated as an example in any one of FIG. 3A through FIG. 3D, for example.

In step S201, the controller 50 of the measurement apparatus 1 determines whether the detection signals obtained in step S200 all have the same properties. When the controller 50 determines that all have the same properties, the controller 50 performs the processing of step S202. When the controller 50 determines that some properties are different, the controller 50 performs the processing of step S204.

In step S202, after the controller 50 of the measurement apparatus 1 determines that all the properties in step S201 are the same, the controller 50 determines whether all the properties correspond to a first detection signal. In the present disclosure, the "first detection signal" includes, for example, the detection signal illustrated in FIG. 3A or FIG. 4A when the liquid L is not present in the container 105 and the container 105 is empty. When the controller 50 determines that all correspond to the first detection signal, the controller 50 performs the processing of step S203. When the controller 50 determines that all do not correspond to the first detection signal, the controller 50 performs the processing of step S205.

In step S203, after the controller 50 of the measurement apparatus 1 determines all of the detection signals in step S202 correspond to the first detection signal, the controller 50 determines that the liquid L is not present in the container 105 and the container 105 is empty.

In step S204, after the controller 50 of the measurement apparatus 1 determines that some properties are different in step S201, the controller 50 determines whether the first detection signal is among the detection signals obtained in step S200. When the controller 50 determines that the first detection signal is present, the controller 50 performs the processing of step S206. When the controller 50 determines that the first detection signal is not present, the controller 50 performs the processing of step S205.

In step S205, after the controller 50 of the measurement apparatus 1 determines that the first detection signal is not present in step S204, the controller 50 determines that the container 105 is filled with the liquid L over an entire range where the detectors 20 are disposed and the container 105 is full.

In step S206, after the controller 50 of the measurement apparatus 1 determines that the first detection signal is present in step S204, the controller 50 identifies one of the detectors 20 that indicates the first detection signal and another adjacent one of the detectors 20 that indicates a second detection signal different from the first detection signal. In the present disclosure, the "second detection signal" includes, for example, the detection signal illustrated in any one of FIG. 3B through FIG. 3D or FIG. 4B through FIG. 4D when the liquid L is present in the container 105 and the container 105 is not empty.

In step S207, the controller 50 of the measurement apparatus 1 calculates a position between the one detector 20 and the other detector 20 identified in step S206 as the position of the liquid surface of the liquid L.

In step S208, the controller 50 of the measurement apparatus 1 causes display on the display 30 of results regarding the position of the liquid surface of the liquid L, based on any one of steps S203, S205, and S207. More specifically, the controller 50 causes display of the position of the liquid surface of the liquid L in the container 105 and the like as visual information on the display 30.

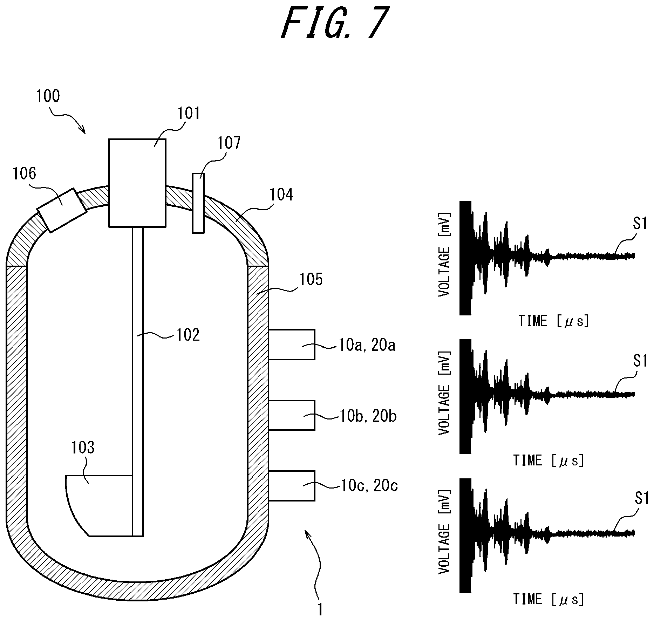

FIG. 7 is a schematic diagram illustrating an example of detection signals when the container 105 is empty.

When the container 105 is empty, the detection signals of the ultrasonic waves detected by the detector 20a, the detector 20b, and the detector 20c all correspond to the first detection signal S1. In other words, the detection signals indicate waveforms such that the reflection signals from the inner surface of the wall of the container 105 are at maximum in the time region R1 and the reflection signals from the stirring shaft 102 are zero in the time region R4, as illustrated in FIG. 3A or FIG. 4A.

On the other hand, when the container 105 is full, the detection signals of the ultrasonic waves detected by the detector 20a, the detector 20b, and the detector 20c all differ from the first detection signal S1. The detection signals may all have the same properties as each other, or at least some of the detection signals may have different properties.

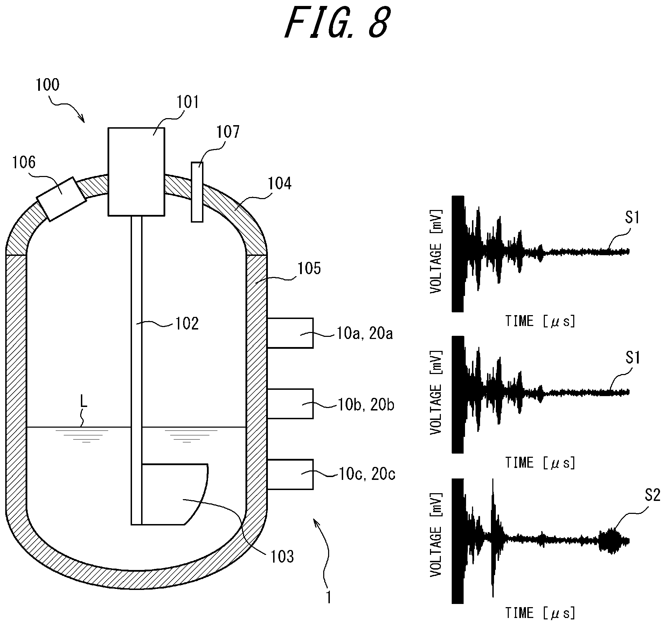

FIG. 8 is a schematic diagram illustrating example 1 of detection signals when the container 105 is not empty.

When the container 105 is not empty, the second detection signal S2 that differs from the first detection signal S1 at least in part is included among the detection signals of the ultrasonic waves detected by the detector 20a, the detector 20b, and the detector 20c. For example, in example 1 illustrated in FIG. 8, the second detection signal S2 corresponding to FIG. 3B is obtained at the detector 20c disposed at the lower level where the liquid L is filled and the stirrer blade 103 faces the detector 20c side. On the other hand, the first detection signal S1 is obtained at the detector 20b and the detector 20a disposed at middle and upper levels, respectively, which are not filled with the liquid L.

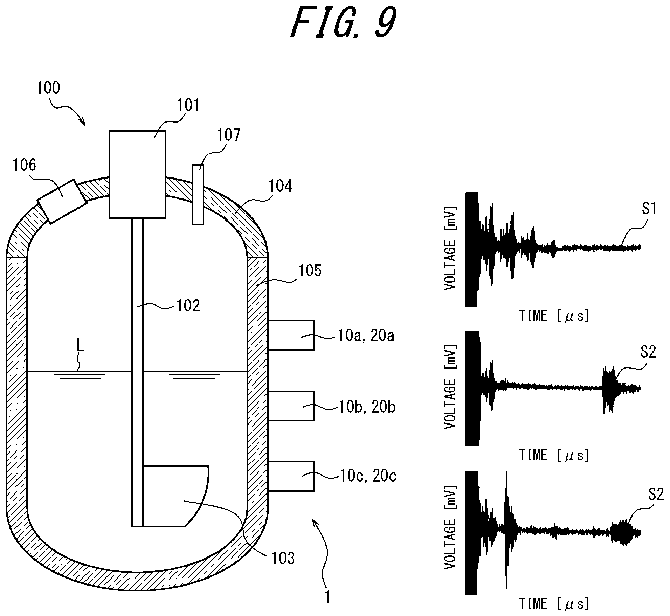

FIG. 9 is a schematic diagram illustrating example 2 of detection signals when the container 105 is not empty.

For example, in example 2 illustrated in FIG. 9, the second detection signal S2 is obtained at the detector 20c and the detector 20b, which are disposed in the lower and middle levels, respectively, which are filled with the liquid L. More specifically, the second detection signal S2 corresponding to FIG. 3B is obtained at the detector 20c at the lower level, where the stirrer blade 103 faces the detector 20c side. The second detection signal S2 corresponding to FIG. 3C is obtained at the detector 20b at the middle level, where the stirring shaft 102 extends. In contrast, the first detection signal S1 is obtained at the detector 20a disposed at the upper level, which is not filled with the liquid L.

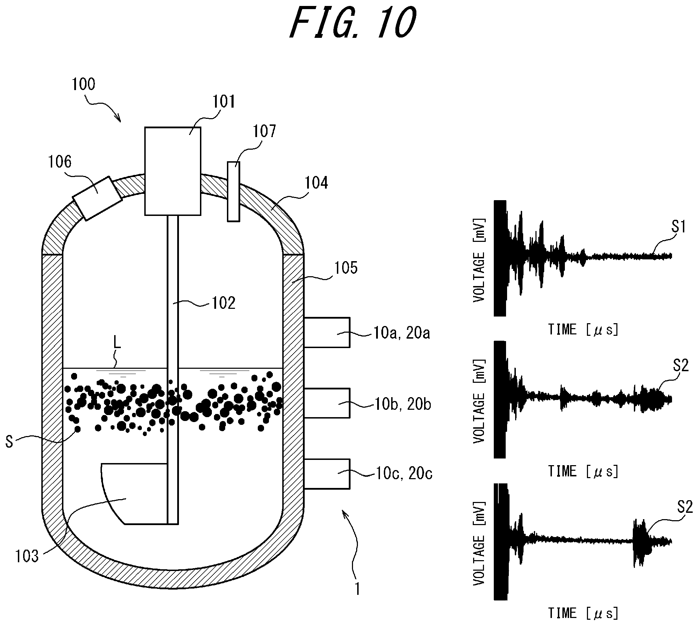

FIG. 10 is a schematic diagram illustrating example 3 of detection signals when the container 105 is not empty.

For example, in example 3 illustrated in FIG. 10, the second detection signal S2 is obtained at the detector 20c and the detector 20b, which are disposed at the lower and middle levels, respectively, which are filled with the liquid L. More specifically, the second detection signal S2 corresponding to FIG. 3C is obtained at the detector 20c at the lower level where the object S is not present and the stirrer blade 103 faces an opposite side to the detector 20c with the stirring shaft 102 facing the detector 20c. The second detection signal S2 corresponding to FIG. 3D is obtained at the detector 20b at the middle level, where the object S is present and the stirring shaft 102 extends. In contrast, the first detection signal S1 is obtained at the detector 20a disposed at the upper level, which is not filled with the liquid L.

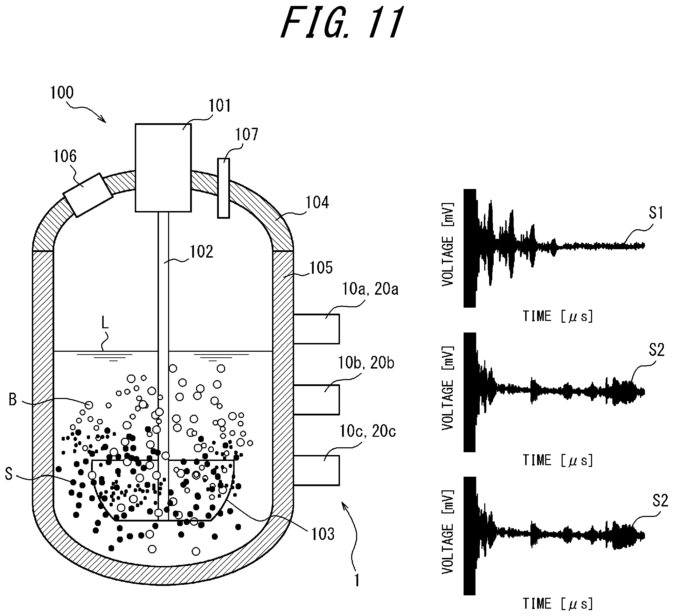

FIG. 11 is a schematic diagram illustrating example 4 of detection signals when the container 105 is not empty.

For example, in example 4 illustrated in FIG. 11, the second detection signal S2 is obtained at the detector 20c and the detector 20b, which are disposed in the lower and middle levels, respectively, which are filled with the liquid L. More specifically, the second detection signal S2 corresponding to FIG. 3D is obtained at the detector 20c at the lower level, where the object S, the bubbles B, and the like are present. Similarly, the second detection signal S2 corresponding to FIG. 3D is obtained at the detector 20b at the middle level, where the object S, the bubbles B, and the like are present. In contrast, the first detection signal S1 is obtained at the detector 20a disposed at the upper level, which is not filled with the liquid L.

As illustrated in FIG. 8 through FIG. 11, the controller 50 is able to identify the presence of the liquid L at locations where the second detection signal S2 is obtained and the absence of the liquid L at locations where the first detection signal S1 is obtained as a result of detection of ultrasonic waves by the detectors 20. In other words, the controller 50 is able to calculate the position between one of the detectors 20 indicating the first detection signal S1 and another adjacent one of the detectors 20 indicating the second detection signal S2 that is different from the first detection signal S1 as the position of the liquid surface of the liquid L.

For example, in example 1 illustrated in FIG. 8, the controller 50 calculates the position between the detector 20b and the detector 20c as the position of the liquid surface of the liquid L. For example, in examples 2 through 4 illustrated in FIG. 9 through FIG. 11, respectively, the controller 50 calculates the position between the detector 20a and the detector 20b as the position of the liquid surface of the liquid L.

A defined spacing is provided between the detectors 20 that are fixed. The controller 50 reads information on the defined spacing stored in the memory 40 and calculates the position of the liquid surface of the liquid L as a defined vertical range based on the information.

### (Presence or absence of bubbles B or particles)

The controller 50 of the measurement apparatus 1 measures the presence or absence of the bubbles B or particles based on at least one of the positive or negative beginning of the waveform and the speed of sound of the ultrasonic wave detected by the detectors 20. For example, the controller 50 obtains the positive or negative beginning of reference waveforms of reflection signals of ultrasonic waves output from the detectors 20 with the inside of the container 105 filled with the liquid L in a second reference state and stores the positive or negative beginnings in the memory 40. In the present disclosure, the "second reference state" includes, for example, a state in which the bubbles B are not present in the liquid L.

As long as the bubbles B are not present in the liquid L, the positive or negative beginnings of the waveforms of the reflection signals of the ultrasonic waves do not change. Therefore, the controller 50 is able to determine the presence or absence of the bubbles B in the liquid L based on the information regarding the positive or negative beginnings of the waveforms. For example, the beginning of a waveform of a reflection signal from any metal part, the stirrer blade 103, the stirring shaft 102, and the inner surface of the container 105, will be positive or negative according to a transmittance formula. The waveforms are unique and identical in shape, although there are amplitude differences according to the transmittance.

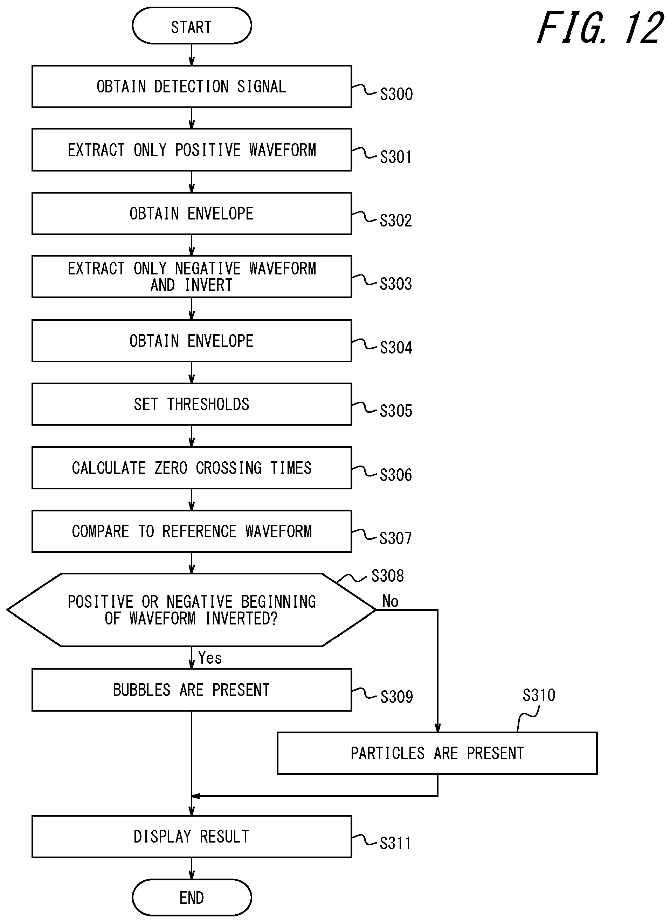

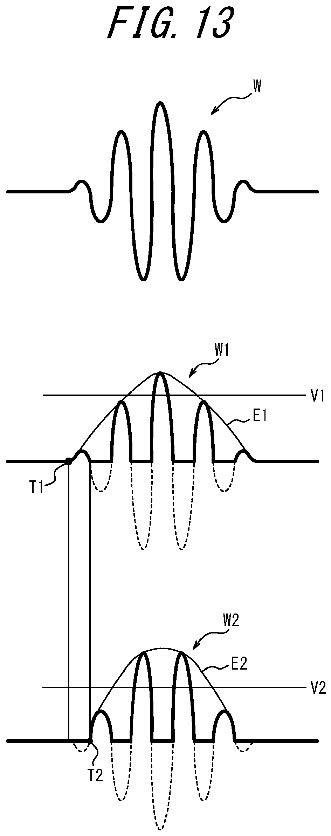

FIG. 12 is a flowchart illustrating example 3 of operation of the measurement apparatus 1 illustrated in FIG. 1. FIG. 13 is a schematic diagram illustrating example 3 of the operation of the measurement apparatus 1 in FIG. 1. Example 3 of the measurement method performed by the measurement apparatus 1 illustrated in FIG. 1 is described with reference to FIG. 12 and FIG. 13. The flowchart illustrated in FIG. 12 illustrates a basic processing flow of the measurement method when the presence or absence of the bubbles B or particles, among states of the liquid L, is measured using the measurement apparatus 1.

In step S300, the controller 50 of the measurement apparatus 1 obtains a detection signal from each of the detectors 20.

In step S301, the controller 50 of the measurement apparatus 1 extracts only a positive waveform from a propagation waveform for a defined reflection signal included in a detection signal obtained in step S300. For example, such a propagation waveform includes any waveform in the time region R3. For example, the controller 50 extracts only a positive waveform W1 from a propagation waveform W, as illustrated in FIG. 13.

In step S302, the controller 50 of the measurement apparatus 1 performs envelope processing on the positive waveform extracted in step S301. For example, the controller 50 obtains an envelope E1 of the positive waveform W1, as illustrated in FIG. 13.

In step S303, the controller 50 of the measurement apparatus 1 extracts only the negative waveform from the propagation waveform of the defined reflection signal included in the detection signal obtained in step S300, and inverts the negative waveform. For example, the controller 50 extracts only a negative waveform W2 from the propagation waveform W and inverts positive and negative as illustrated in FIG. 13.

In step S304, the controller 50 of the measurement apparatus 1 performs envelope processing on the negative waveform extracted in step S303. For example, the controller 50 obtains an envelope E2 of the negative waveform W2, as illustrated in FIG. 13.

In step S305, the controller 50 of the measurement apparatus 1 sets threshold values for the envelopes obtained in steps S302 and S304. For example, the controller 50 sets a threshold value V1 for the envelope E1 obtained in step S302, as illustrated in FIG. 13. For example, the controller 50 sets a threshold value V2 for the envelope E2 obtained in step S304.

In step S306, the controller 50 of the measurement apparatus 1 calculates zero-crossing times earlier than times corresponding to the threshold values set in step S305. For example, as illustrated in FIG. 13, the controller 50 calculates a zero-crossing time T1, which is earlier than the time corresponding to the threshold value V1 set in step S305. For example, the controller 50 calculates a zero-crossing time T2, which is earlier than the time corresponding to the threshold value V2 set in step S305. In the example illustrated in FIG. 13, the time T1 for the positive waveform W1 is earlier than the time T2 for the negative waveform W2. Therefore, the controller 50 calculates that the beginning of the propagation waveform W is positive.

In step S307, the controller 50 of the measurement apparatus 1 compares the positive or negative beginning of the waveform calculated in step S306 with that of a reference waveform when the liquid L is in the second reference state.

In step S308, the controller 50 of the measurement apparatus 1 determines whether the positive or negative beginning of the waveform calculated in step S306 is inverted relative to the positive or negative beginning of the reference waveform when the liquid L is in the second reference state. When the controller 50 determines that the positive or negative beginning of the waveform is inverted, the controller 50 performs the processing of step S309. When the controller 50 determines that the positive or negative beginning of the waveform is not inverted, the controller 50 performs the processing of step S310.

In step S309, the controller 50 of the measurement apparatus 1 determines that the bubbles B are present in the liquid L when the positive or negative beginning of the waveform is inverted in step S308. Thus, the controller 50 determines that the bubbles B are present in the liquid L when the positive or negative beginning of the waveform when the liquid L is being stirred is inverted relative to the positive or negative beginning of the reference waveform when the liquid L is in the second reference state.

In step S310, when the controller 50 of the measurement apparatus 1 determines that the positive or negative beginning of the waveform is not inverted in step S308, the controller 50 determines that particles, not the bubbles B, are present in the liquid L. Thus, the controller 50 determines that particles, not the bubbles B, are present in the liquid L when the positive or negative beginning of the waveform when the liquid L is being stirred is not inverted relative to the positive or negative beginning of the reference waveform when the liquid L is in the second reference state.

In step S311, the controller 50 of the measurement apparatus 1 causes display on the display 30 of a result regarding the presence or absence of the bubbles B or particles based on either step S309 or step S310. More specifically, the controller 50 causes the display 30 to display the presence or absence of the bubbles B, particles, and the like in the liquid L as visual information.

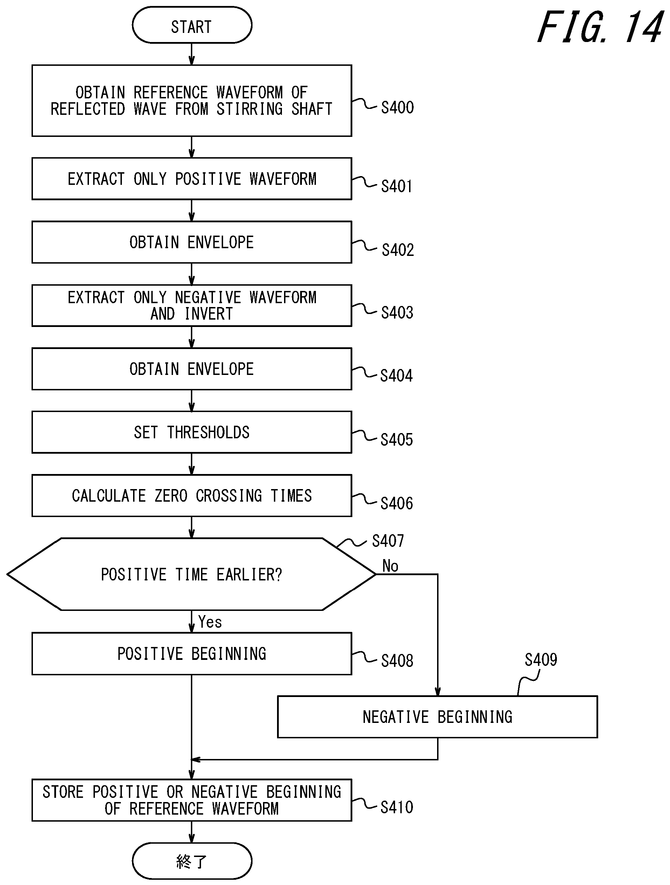

FIG. 14 is a flowchart illustrating example 4 of operation of the measurement apparatus 1 illustrated in FIG. 1. Example 4 of the measurement method performed by the measurement apparatus 1 illustrated in FIG. 1 is described with reference to FIG. 14. The flowchart illustrated in FIG. 14 illustrates a basic processing flow of the measurement method when obtaining the reference waveform data used for the comparison processing in step S307 of FIG. 12.

In step S400, using each of the detectors 20, the controller 50 of the measurement apparatus 1 obtains a reference waveform of a reflected wave of an ultrasonic wave reflected from the stirring shaft 102.

In step S401, the controller 50 of the measurement apparatus 1 extracts only a positive waveform from the reference waveform obtained in step S400.

In step S402, the controller 50 of the measurement apparatus 1 performs envelope processing on the positive waveform extracted in step S401. The controller 50 obtains the envelope of the positive waveform.

In step S403, the controller 50 of the measurement apparatus 1 extracts only the negative waveform from the reference waveform obtained in step S400 and inverts the negative waveform.

In step S404, the controller 50 of the measurement apparatus 1 performs envelope processing on the negative waveform extracted in step S403. The controller 50 obtains the envelope of the negative waveform.

In step S405, the controller 50 of the measurement apparatus 1 sets threshold values for the envelopes obtained in steps S402 and S404.

In step S406, the controller 50 of the measurement apparatus 1 calculates zero-crossing times earlier than times corresponding to the threshold values set in step S405.

In step S407, the controller 50 of the measurement apparatus 1 determines whether the zero-crossing time for the positive waveform calculated in step S406 is earlier than the zero-crossing time for the negative waveform. When the controller 50 determines that the time for the positive waveform is earlier, the controller 50 performs the processing of step S408. When the controller 50 determines that the time for the negative waveform is earlier, the controller 50 performs the processing of step S409.

In step S408, the controller 50 of the measurement apparatus 1 calculates that the beginning of the reference waveform is positive when the time for the positive waveform is determined to be earlier in step S407.

In step S409, the controller 50 of the measurement apparatus 1 calculates that the beginning of the reference waveform is negative when the time for the negative waveform is determined to be earlier in step S407.

In step S410, the controller 50 of the measurement apparatus 1 stores the positive or negative beginning of the reference waveform calculated in step S408 or step S409 in the memory 40.

The controller 50 of the measurement apparatus 1 may measure the presence or absence of the bubbles B or particles based on the speed of sound of the ultrasonic waves detected by the detectors 20 instead of or in addition to the positive or negative beginnings of the waveforms of the ultrasonic waves as described above. When the bubbles B or particles are present in the liquid L, the speed of sound of the ultrasonic waves propagating in the liquid L changes. Therefore, the propagation times of the ultrasonic waves change, and the time positions of the propagation waveforms change in the detection signals. The controller 50 may also measure the presence or absence of the bubbles B or particles based on such changes in time positions.

### (Density of bubbles B or particles)

The controller 50 of the measurement apparatus 1 measures the density of the bubbles B or particles based on the speed of sound of the ultrasonic waves detected by the detectors 20.

For example, let the density of the liquid L be ρ_{w}, the density of the bubbles B be ρₐ, the bulk modulus of the bubbles B be Kₐ, and the volume fraction of the bubbles B be α. The volume fraction α is expressed as ρₐ / (ρ_{w} + ρₐ). In this case, the speed of sound c of the liquid L mixed with the bubbles B is expressed by the following formula. $c = \sqrt{\frac{{K}_{a}}{α \left(1-α\right) {ρ}_{w}}}$ (Formula 1)

As indicated in Formula 1, as the amount of the bubbles B, that is, the density ρₐ, increases, the speed of sound c slows down. The controller 50 is able to back-calculate the volume fraction α from Formula 1 by calculating the speed of sound c in the liquid L mixed with the bubbles B based on the reflection signal detected during stirring.

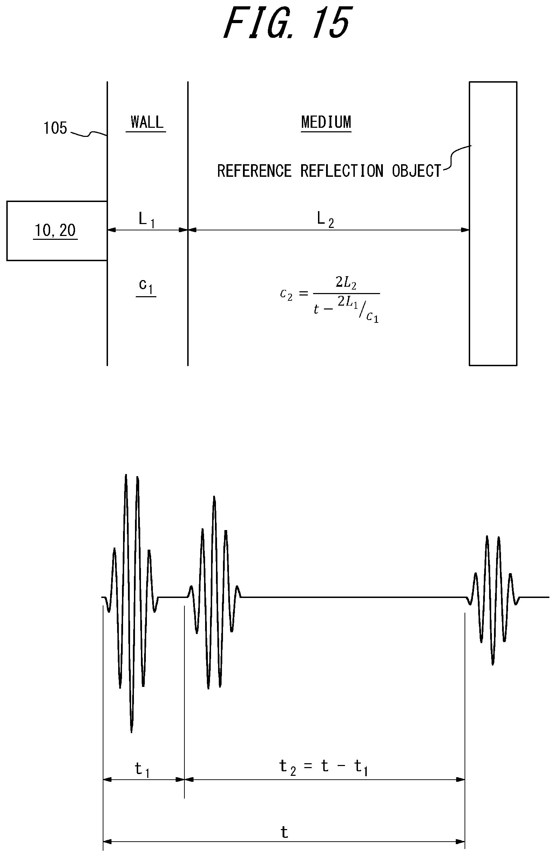

FIG. 15 is a schematic diagram for explanation of the calculation method for calculating the speed of sound in the liquid L.

The controller 50 is able to calculate the ratio of the amount of the bubbles B, that is, the volume fraction α, by obtaining a reference speed of sound in advance from a reference detection signal and comparing time positions of a reflection signal detected during stirring with the reference detection signal. A reference is needed to measure the change in speed of sound. More specifically, as illustrated in FIG. 15, the controller 50 measures a propagation time t of an ultrasonic wave output from one of the outputs 10 to a reference reflection object in the stirrer 100, based on the reflection signal detected by one of the detectors 20. In the present disclosure, the "reference reflection object" includes, for example, the stirring shaft 102, the stirrer blade 103, and the inner surface of the opposite wall.

When the bubbles B are present in the liquid L, a reflection signal between the inner surface of the wall of the container 105 and the reference reflection object may be detected by the detectors 20. In order to avoid that the speed of sound is calculated by detecting such a reflection signal, the reflection signal is obtained several times using a non-moving reference reflection object, the waveforms are averaged, and then a threshold is used in calculation of the propagation time t.

The controller 50 calculates the speed of sound c₂ at the time of reference in the liquid L as the medium based on: the speed of sound c₁ within the wall of the container 105 and thickness Li of the wall, which are stored in advance in the memory 40; distance L₂ from the inner surface of the wall of the container 105 to the reference reflection object; and the measured propagation time t. Similarly, the controller 50 measures the propagation time t when the medium changes during stirring and calculates the speed of sound c₂ during stirring of the liquid L. The controller 50 compares the speed of sound c₂ between the time of reference and during stirring, and back-calculates the volume fraction α from Formula 1.

The above calculation processing for the volume fraction α applies equally well when particles as solids are dispersed in the liquid L rather than the bubbles B.

### (Density of liquid L)

The density of the liquid L changes when the object S is stirred with respect to the liquid L. When the density of the liquid L changes, the speed of sound of ultrasonic waves propagating in the liquid L changes. For example, the speed of sound c of an ultrasonic wave propagating through a solid, assuming the elastic modulus of the solid is M and the density is ρ, is represented by the following formula. $c = \sqrt{\frac{M}{ρ}}$ (Formula 2)

Similarly, the speed of sound c of an ultrasonic wave propagating in the liquid L, assuming the bulk modulus of the liquid L is K and the density is ρ, is represented by the following formula. $c = \sqrt{\frac{K}{ρ}}$ (Formula 3)

From the above, as the density ρ increases, the speed of sound slows down, and as the density ρ decreases, the speed of sound speeds up. The controller 50 is able to measure the density ρ of the liquid L based on the change in the reflection signal reflected at the reference reflection object described with reference to FIG. 15, for example. More specifically, the controller 50 measures the propagation time t of the reflection signal reflected at the reference reflection object and calculates the speed of sound c₂ when the liquid L is the medium. The controller 50 back-calculates the density ρ from Formula 3 based on the calculated speed of sound c₂.

### (Viscosity of liquid L)

In addition to the state of the liquid L as described above, the controller 50 is also able to measure the viscosity of the liquid L. The greater the viscosity of the liquid L, the greater the attenuation of the amplitude of the reflection signal illustrated in FIG. 15. On the other hand, the smaller the viscosity of the liquid L, the smaller the attenuation of the amplitude of the reflection signal. The controller 50 obtains reference data in advance that correlates the amplitude of the reflection signal to the viscosity of the liquid L. The controller 50 is also able to measure the viscosity of the liquid L by measuring amplitude based on the reflection signal of an ultrasonic wave propagated in the liquid L during stirring, and comparing with the reference data.

### (Effects)

According to the measurement apparatus 1 of the embodiment described above, the state of the liquid L used in stirring is more easily measured even during stirring. The measurement apparatus 1 measures the state of the liquid L used in stirring in the container 105 by detecting ultrasonic waves using the detectors 20 fixed to the container 105. Accordingly, the measurement apparatus 1 is able to quantitatively measure the state of the liquid L used in stirring by sensing other than sensing a specific physical quantity, without having to open the lid 104 of the container 105, during stirring in the container 105. The measurement apparatus 1 is able to measure the state of the liquid L in real time, even during stirring, without removing the liquid L in the stirrer 100. This improves the convenience of the measurement apparatus 1 when measuring the state of the liquid L used in stirring in the container 105 of the stirrer 100.

By measuring the product state of the liquid L based on the reference data and the measurement data during stirring, the measurement apparatus 1 is able to more easily measure the product state of the liquid L in stirring, even during stirring. The measurement apparatus 1 is able to easily check the product state of the liquid L in stirring by quantitatively determining the product state of the liquid L in stirring without using a unique formula to measure a specific physical quantity in the real time measurement described above. Therefore, a similar effect is achieved to that described above, of improvement in convenience of the measurement apparatus 1.

The measurement apparatus 1 is able to quantitatively determine that the object S has been successfully mixed with the liquid L by determining that the stirring is complete when the difference of the measured data from the reference data becomes constant over a defined time period. The measurement apparatus 1 is able to quantitatively determine that stirring is complete without opening the lid 104 of the container 105. The measurement apparatus 1 is able to determine, in real time, that the stirring is complete without removing the liquid L in the stirrer 100. Therefore, a similar effect is achieved to that described above, of improvement in convenience of the measurement apparatus 1.

The measurement apparatus 1 is able to more easily measure the position of the liquid surface of the liquid L, even during stirring, by measuring the position of the liquid surface of the liquid L based on the detection signals detected by the detectors 20. The measurement apparatus 1 is able to easily measure the position of the liquid surface of the liquid L without opening the lid 104 of the container 105 during stirring in the container 105. The measurement apparatus 1 is able to measure the position of the liquid surface of the liquid L in real time, even during stirring, without opening the lid 104. Therefore, a similar effect is achieved to that described above, of improvement in convenience of the measurement apparatus 1.

The measurement apparatus 1 calculates the position between one of the detectors 20 indicating the first detection signal S1 and another adjacent one of the detectors 20 indicating the second detection signal S2 that is different from the first detection signal S1 as the position of the liquid surface of the liquid L. Accordingly, the measurement apparatus 1 is able to more easily measure the position of the liquid surface of the liquid L, even during stirring, based on the detection signals obtained by the detectors 20. Therefore, a similar effect is achieved to that described above, of improvement in convenience of the measurement apparatus 1.

The measurement apparatus 1 is able to more easily measure the presence or absence of the bubbles B or particles, even during stirring, by measuring the presence or absence of the bubbles B or particles based on at least one of the positive or negative beginnings of the waveforms and the speed of sound of the ultrasonic waves detected by the detectors 20. The measurement apparatus 1 is able to easily measure the presence or absence of the bubbles B or particles without opening the lid 104 of the container 105 during stirring in the container 105. The measurement apparatus 1 is able to measure the presence or absence of the bubbles B or particles in real time, even during stirring, without opening the lid 104. Therefore, a similar effect is achieved to that described above, of improvement in convenience of the measurement apparatus 1.

The measurement apparatus 1 determines that the bubbles B are present when the positive or negative beginning of the waveform when the liquid L is being stirred is inverted relative to the positive or negative beginning of the reference waveform when the liquid L is in the second reference state. Accordingly, the measurement apparatus 1 is able to objectively measure the presence or absence of the bubbles B based on waveform shape changes. Therefore, a similar effect is achieved to that described above, of improvement in convenience of the measurement apparatus 1.

The measurement apparatus 1 is able to more easily measure the density of the bubbles B or particles, even during stirring, by measuring the density of the bubbles B or particles based on the speed of sound of ultrasonic waves detected by the detectors 20. The measurement apparatus 1 is able to easily measure the density of the bubbles B or particles without opening the lid 104 of the container 105 during stirring in the container 105. The measurement apparatus 1 is able to measure the density of the bubbles B or particles in real time, even during stirring, without opening the lid 104. Therefore, a similar effect is achieved to that described above, of improvement in convenience of the measurement apparatus 1.

The pairs of the outputs 10 and the detectors 20 are disposed along the outer surface of the container 105, such that the measurement apparatus 1 is able to easily measure from outside the stirrer 100 the state of the liquid L being stirred. The measurement apparatus 1 is able to easily measure the state of the liquid L from outside, without opening the lid 104 of the container 105 during stirring in the container 105. The measurement apparatus 1 is able to measure the state of the liquid L from outside in real time, even during stirring, without opening the lid 104. Therefore, a similar effect is achieved to that described above, of improvement in convenience of the measurement apparatus 1.

### (Variations)

Although the present disclosure has been described based on the drawings and examples, it should be noted that a person skilled in the art may easily make variations and modifications based on the present disclosure. Therefore, it should be noted that such variations and modifications are included within the scope of the present disclosure. For example, functions and the like included in each structure and step may be rearranged, and multiple structures and steps may be combined into one or divided, as long as no logical inconsistency results.

For example, the present disclosure may be realized as a program describing the processing content to realize each function of the measurement apparatus 1 described above, or as a storage medium on which the program is stored. The scope of the present disclosure should be understood to include these examples.

For example, the shape, size, arrangement, orientation, and number of each of the components described above are not limited to those illustrated in the above description and drawings. The shape, size, arrangement, orientation, and number of each of the components may be configured arbitrarily, as long as the function thereof is achievable.

In the embodiment described above, the controller 50 is described as including the control circuitry 51 and the information processing terminal 52 as separate components, but the controller 50 is not limited to this. The controller 50 may be configured as a single control module that combines the functions of the control circuitry 51 with the functions of the information processing terminal 52.

In the embodiment described above, the first reference state is described as including an initial state in which, for example, the bubbles B or the like are not present in the liquid L and the object S is not mixed at all with the liquid L after being introduced, but the first reference state is not limited to this. The first reference state may include, instead of or in addition to such an initial state, an end state in which the bubbles B and the like are not present in the liquid L and the object S is completely mixed with the liquid L.

In such a case, the measurement apparatus 1 may perform a different determination process instead of or in addition to the determination process of determining that the stirring of the object S with respect to the liquid L is complete when the difference of the measurement data from the reference data becomes constant over a defined time. Such a determination process may include determining that the stirring of the object S with respect to the liquid L is complete when the measurement data falls within a defined error range relative to the reference data regarding the product state of the liquid L in the first reference state as the end state.

In the embodiment described above, the measurement apparatus 1 is described as using a plurality of the detectors 20 to measure the position of the liquid surface of the liquid L, but the measurement apparatus 1 is not limited to this. Instead of or in addition to such a measurement process, the measurement apparatus 1 may determine that the position of the liquid surface of the liquid L has exceeded a certain level by repeatedly performing detection of ultrasonic waves using only one of the detectors 20 and observing how the detection signals change from the first detection signal S1 to the second detection signal S2.

In the embodiment described above, in measuring the presence or absence of the bubbles B or particles, the measurement apparatus 1 is described as extracting an arbitrary propagation waveform W from the time region R3, for example, and performing envelope processing or the like, but the measurement apparatus 1 is not limited to this. The measurement apparatus 1 may perform different waveform processing instead of or in addition to such processing. Such waveform processing may include a method based on, for example, a zero-crossing method, correlation, a Hilbert transform, and the like.

In the embodiment described above, the pairs of the outputs 10 and the detectors 20 are described as being disposed along the outer surface of the container 105, but the outputs 10 and the detectors 20 are not limited to this. The outputs 10 and the detectors 20 do not have to be disposed in the same position as pairs and may be separate from each other. At least one of the outputs 10 may be disposed inside the container 105 instead of outside the container 105. At least one of the detectors 20 may be disposed inside the container 105 instead of outside the container 105.

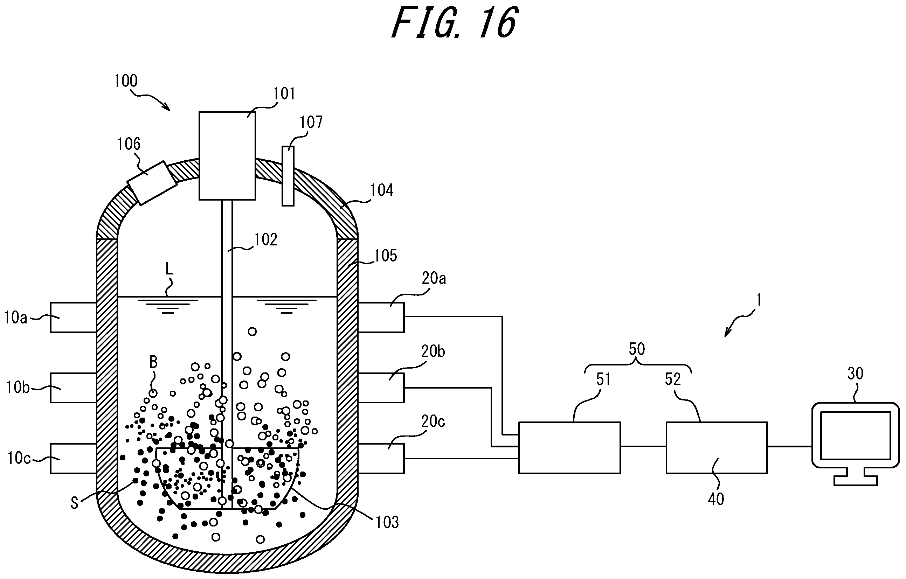

FIG. 16 is a schematic diagram illustrating Variation 1 of the measurement apparatus 1 illustrated in FIG. 1. In the example illustrated in FIG. 16, the outputs 10 and each corresponding one of the detectors 20 are configured as different modules from each other. Each output detector may include one output 10 and one detector 20 configured as different modules from each other.

The outputs 10 and the detectors 20 of each pair are described as being disposed in the same position as each other, as illustrated in FIG. 1, but configurations are not limited to this. The outputs 10 and the detectors 20 of each pair may be disposed separately from each other, as illustrated in FIG. 16. For example, the detector 20a, the detector 20b, and the detector 20c may be disposed along one side of the outer surface of the container 105. For example, the output 10a, the output 10b, and the output 10c may be disposed along another side of the outer surface of the container 105.

In such a case, a detection signal output from one of the detectors 20 includes a transmission signal instead of a reflection signal of the ultrasonic wave propagated in the liquid L. In other words, each of the detectors 20 detects the transmitted wave of the ultrasonic wave output from a paired one of the outputs 10. The measurement apparatus 1 is able to measure the state of the liquid L based on the same principle as the measurement method described above, even when the detection signal includes a transmission signal. However, the propagation time of ultrasonic waves propagating in the liquid L is halved.

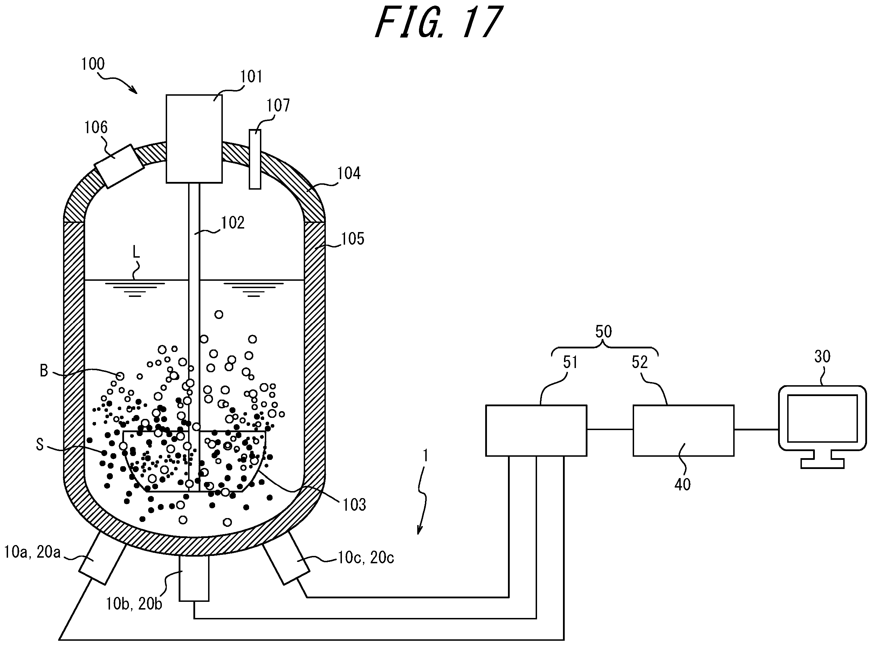

FIG. 17 is a schematic diagram illustrating Variation 2 of the measurement apparatus 1 illustrated in FIG. 1.

The outputs 10 and the detectors 20 of each pair are described as being disposed on the side of the container 105 with respect to each other, as illustrated in FIG. 1, but configurations are not limited to this. Each pair of the outputs 10 and the detectors 20 may be disposed at the bottom of the container 105, as illustrated in FIG. 17.

In such a case, a detection signal output from one of the detectors 20 includes a reflection signal of an ultrasonic wave propagated in the liquid L, as described in the embodiment above. The measurement apparatus 1 is able to measure the state of the liquid L based on the same principle as the measurement method described above. However, the propagation time of ultrasonic waves propagating in the liquid L is different.

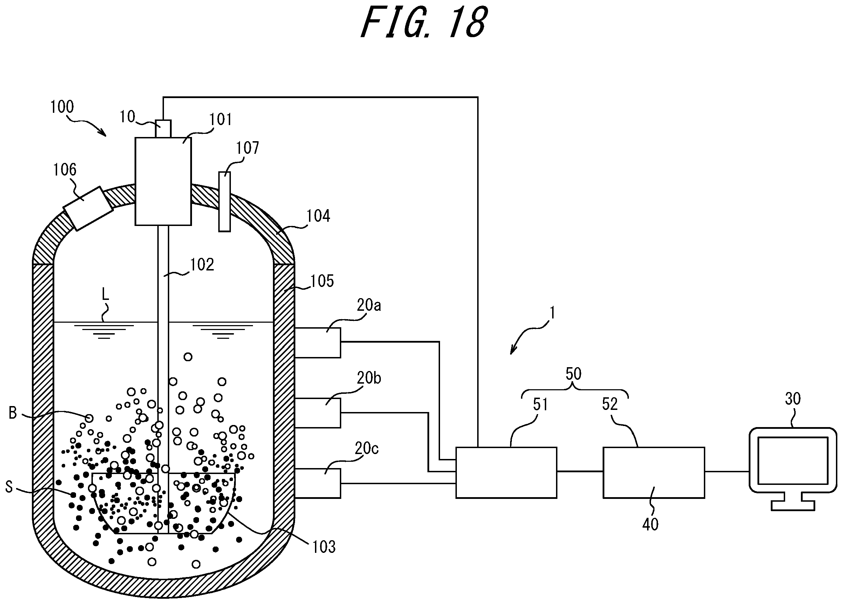

FIG. 18 is a schematic diagram illustrating Variation 3 of the measurement apparatus 1 illustrated in FIG. 1.

The outputs 10 and the detectors 20 of each pair are described as being disposed in the same position as each other, as illustrated in FIG. 1, but configurations are not limited to this. As illustrated in FIG. 18, one output 10 may be disposed in a different position relative to the detectors 20. For example, the detector 20a, the detector 20b, and the detector 20c may be positioned along the side of the container 105. The output 10 may be attached to the motor 101, for example, and generate ultrasonic waves from inside the stirrer 100 via the stirring shaft 102.

In such a case, a detection signal output from one of the detectors 20 includes a transmission signal in addition to a reflection signal of the ultrasonic wave propagated in the liquid L. The measurement apparatus 1 is able to measure the state of the liquid L based on the same principle as the measurement method described above, even when the detection signal includes a reflection signal and a transmission signal. However, the propagation time of ultrasonic waves propagating in the liquid L is different.

Instead of or in addition to the stirrer 100, which is intended to disperse the object S in the liquid L, the measurement apparatus 1 described above may be applied to any other product that has measuring the state of the liquid L when stirred as a measurement target. For example, the measurement apparatus 1 may be applied to pumps, food manufacturing apparatus, depolymerization tanks, containers storing the liquid L, and the like.

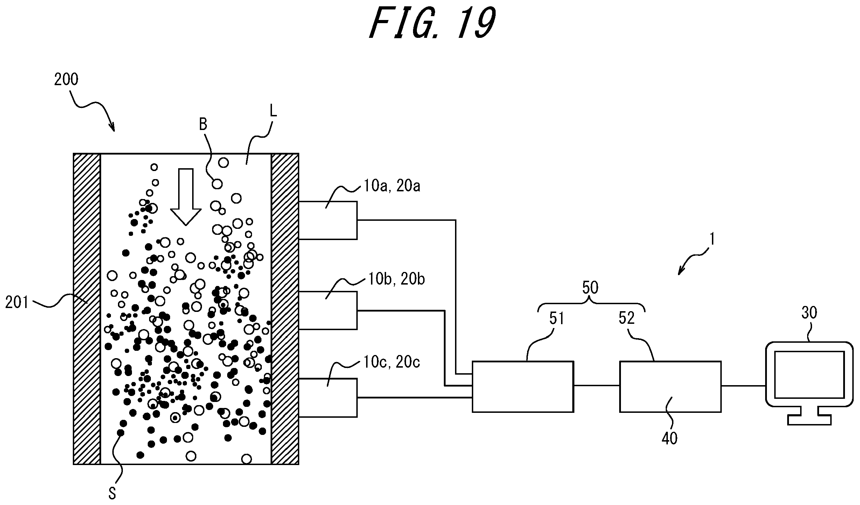

FIG. 19 is a schematic diagram illustrating Variation 4 of the measurement apparatus 1 illustrated in FIG. 1.

According to an embodiment, the measurement apparatus 1 is disposed relative to the container 105 of the stirrer 100 used to stir the object S in the liquid L, but the measurement apparatus 1 is not limited to this example. The measurement apparatus 1 may be disposed relative to a pipe 200 through which the liquid L flows in one direction, instead of the stirrer 100. For example, the measurement apparatus 1 may be disposed relative to a container 201 that constitutes a portion of the pipe 200. The pipe 200 may include round piping or square piping, for example.

According to Variation 4 illustrated in FIG. 19, as in the example illustrated in FIG. 1, one of the outputs 10 and one of the detectors 20 serve as one module, integrally configured as one output detector. One output detector includes one of the outputs 10 and one of the detectors 20. The output detector is fixed relative to the container 201.

Each of the outputs 10 includes any ultrasonic wave output module that is fixed to the container 201. Each of the outputs 10 outputs an ultrasonic wave that propagates in the liquid L flowing in one direction in the container 201.Each of the detectors 20 includes any ultrasonic wave detection module that is fixed to the container 201. Each of the detectors 20 detects an ultrasonic wave output from the outputs 10 and propagated in the liquid L flowing in one direction in the container 201.

The pairs of the outputs 10 and the detectors 20 of the measurement apparatus 1 are disposed along an outer surface of the container 201. The measurement apparatus 1 includes, for example, three pairs of the outputs 10 and the detectors 20. The output 10a and the detector 20a are disposed at an upper level along the outer surface of the container 201. The output 10b and the detector 20b are disposed at a middle level along the outer surface of the container 201. The output 10c and the detector 20c are disposed at a lower level along the outer surface of the container 201.

The principle of measuring the state of the liquid L by the controller 50 is the same as that described for the embodiment above. Detection signals output from the detectors 20 include reflection signals of ultrasonic waves propagated in the liquid L. The measurement apparatus 1 is able to measure the state of the liquid L based on the same principle as that of the measurement method described above when the detection signals include reflection signals. At such a time, the propagation times of ultrasonic waves propagating in the liquid L differ depending on the type of the liquid L. Accordingly, when the liquid L having different compositions is flowing, the measurement apparatus 1 is able to determine not only the state of the liquid L, but also the type of the liquid L, based on the propagation time of the ultrasonic waves.

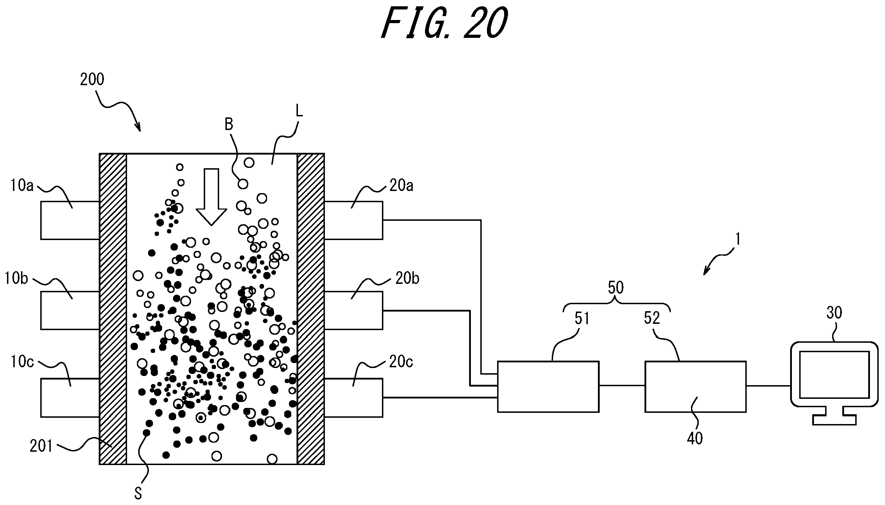

FIG. 20 is a schematic diagram illustrating Variation 5 of the measurement apparatus 1 illustrated in FIG. 1.

According to Variation 5 illustrated in FIG. 20, as in Variation 4 illustrated in FIG. 19, the measurement apparatus 1 is disposed relative to the pipe 200 through which the liquid L flows in one direction, instead of the stirrer 100. However, according to Variation 5 illustrated in FIG. 20, as in Variation 1 illustrated in FIG. 16, the outputs 10 and each corresponding one of the detectors 20 may be configured as different modules from each other. Each output detector may include one output 10 and one detector 20 configured as different modules from each other.

The outputs 10 and the detectors 20 of each pair may be disposed separately from each other, as illustrated in FIG. 20. For example, the detector 20a, the detector 20b, and the detector 20c may be disposed along one side of the outer surface of the container 201. For example, the output 10a, the output 10b, and the output 10c may be disposed along another side of the outer surface of the container 201.

In such a case, a detection signal output from one of the detectors 20 includes a transmission signal instead of a reflection signal of the ultrasonic wave propagated in the liquid L. In other words, each of the detectors 20 detects the transmitted wave of the ultrasonic wave output from a paired one of the outputs 10. The measurement apparatus 1 is able to measure the state of the liquid L based on the same principle as the measurement method described above, even when the detection signal includes a transmission signal. However, the propagation time of ultrasonic waves propagating in the liquid L is halved, relative to that of Variation 4 illustrated in FIG. 19.

At such a time, the propagation times of ultrasonic waves propagating in the liquid L differ depending on the type of the liquid L. Accordingly, when the liquid L having different compositions is flowing, the measurement apparatus 1 is able to determine not only the state of the liquid L, but also the type of the liquid L, based on the propagation time of the ultrasonic waves.

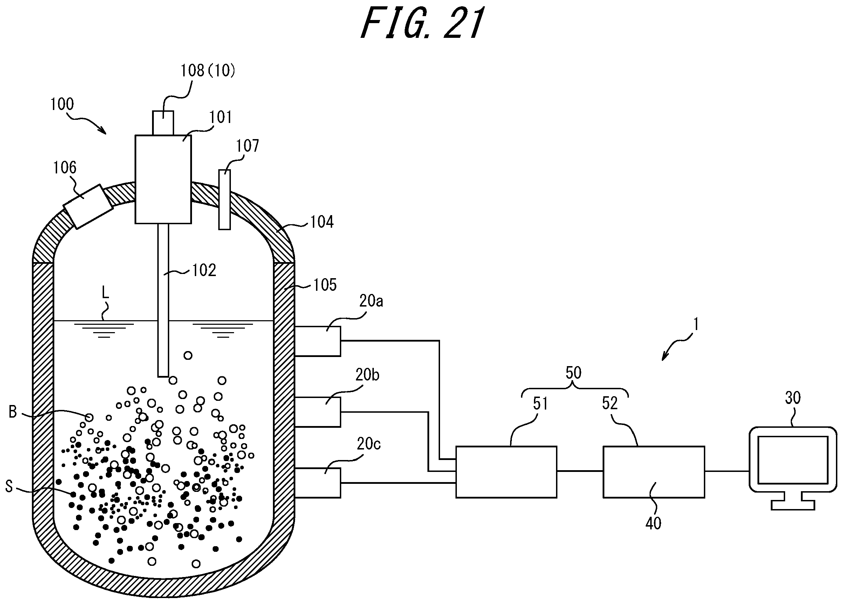

FIG. 21 is a schematic diagram illustrating Variation 6 of the measurement apparatus 1 illustrated in FIG. 1.

According to Variation 6 illustrated in FIG. 21, the stirrer 100 may include a homogenizer 108 instead of the stirrer blade 103 illustrated in FIG. 1. The homogenizer 108 uses ultrasonic waves to disintegrate the object S in the liquid L in the container 105 and uniformly disperse the object S in the liquid L. Each of the output detectors may include the homogenizer 108 as the output 10. Each of the output detectors may detect ultrasonic waves from the homogenizer 108.

For example, the detector 20a, the detector 20b, and the detector 20c may be disposed along one side of the outer surface of the container 105. The output 10 may include, for example, the homogenizer 108 and generate ultrasonic waves from inside the stirrer 100 via the stirring shaft 102.

In such a case, a detection signal output from one of the detectors 20 includes a transmission signal as well as a reflection signal of an ultrasonic wave propagated in the liquid L from the homogenizer 108. The measurement apparatus 1 is able to measure the state of the liquid L based on the same principle as the measurement method described above, even when the detection signal includes a reflection signal and a transmission signal. However, the propagation times of ultrasonic waves propagating in the liquid L are different.

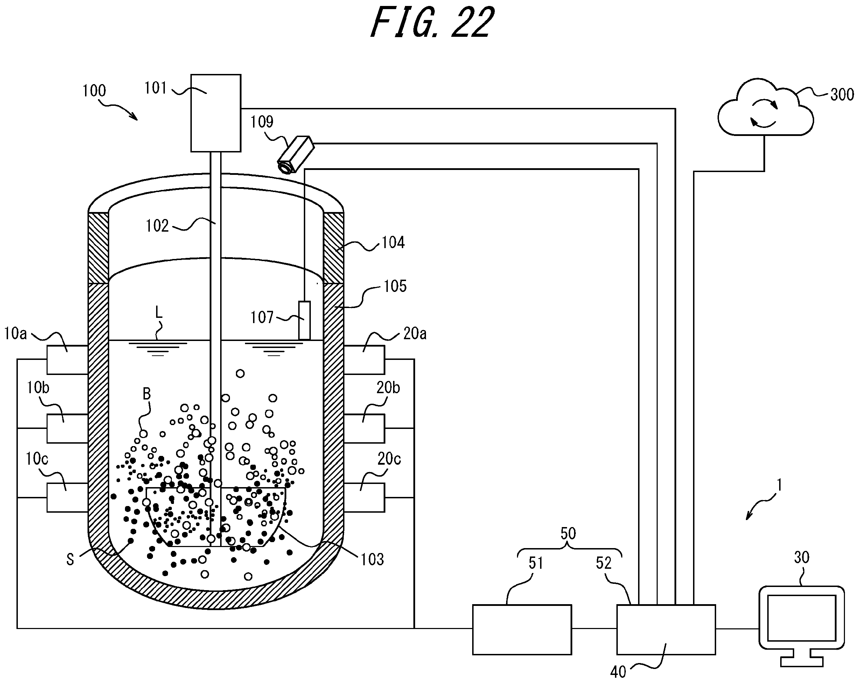

FIG. 22 is a schematic diagram illustrating Variation 7 of the measurement apparatus illustrated in FIG. 1.

According to Variation 7 illustrated in FIG. 22, the outputs 10 and each corresponding one of the detectors 20 may be configured as different modules from each other. Each output detector may include one output 10 and one detector 20 configured as different modules from each other.

The outputs 10 and the detectors 20 of each pair may be disposed separately from each other, as illustrated in FIG. 22. For example, the detector 20a, the detector 20b, and the detector 20c may be disposed along one side of the outer surface of the container 105. For example, the output 10a, the output 10b, and the output 10c may be disposed along another side of the outer surface of the container 105.

In such a case, a detection signal output from one of the detectors 20 includes a transmission signal instead of a reflection signal of the ultrasonic wave propagated in the liquid L. In other words, each of the detectors 20 detects the transmitted wave of the ultrasonic wave output from a paired one of the outputs 10. The measurement apparatus 1 is able to measure the state of the liquid L based on the same principle as the measurement method described above, even when the detection signal includes a transmission signal.

In addition to the components illustrated in FIG. 1, the stirrer may further include a camera 109. The measurement instrument 107 of the stirrer 100 may include a sensor such as a thermometer, a pressure gauge, and the like. The controller 50 of the measurement apparatus 1 may measure, in addition to the state of the liquid L, at least one of the viscosity of the liquid L in the container 105, the pressure of the liquid L in the container 105, the temperature of the liquid L in the container 105, or the appearance of the liquid L in the container 105.

For example, the controller 50 may measure change in the viscosity of the liquid L in the container 105, based on change in axial force by the stirring shaft 102 and the stirrer blade 103 of the stirrer 100. The controller 50 may measure change in the pressure in the container 105 of the liquid L in the container 105, based on the measurement instrument 107. The controller 50 may measure change in the temperature in the container 105 of the liquid L in the container 105, based on the measurement instrument 107. The controller 50 may measure change in the appearance of the liquid L in the container 105, based on the camera 109. The controller 50 may upload measurement data obtained via measurements such as described above to a cloud network 300 or the like.

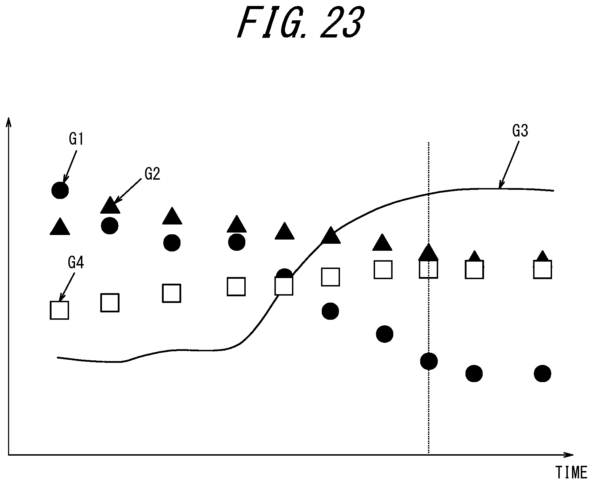

FIG. 23 is a graph illustrating an example of measurement data obtained by the measurement apparatus 1 illustrated in FIG. 22.

In FIG. 23, a graph G1 indicates, as an example, the state of the liquid L measured by the measurement apparatus 1. For example, the graph G1 indicates the product state of the liquid L during stirring, that is, the degree of mixing of the object S with the liquid L. The graph G1 is not limited to this, and may indicate the speed, amplitude, and the like of ultrasound waves propagated in the liquid L.

A graph G2 indicates, as an example, the temperature in the container 105 of the liquid L measured by the measurement apparatus 1. A graph G3 indicates, as an example, the viscosity of the liquid L measured by the measurement apparatus 1. A graph G4 indicates, as an example, the pressure in the container 105 of the liquid L measured by the measurement apparatus 1.

By measuring multiple physical quantities at the same time as illustrated in FIG. 23, the measurement apparatus 1 is able to combine the multiple physical quantities and obtain a correlation thereof, thereby defining the state of the liquid L, for example the product state of the liquid L, with more precision. For example, in FIG. 23, the measurement apparatus 1 may be able to determine from convergence of changes in each graph that in a time region after the dotted line, the liquid L has a defined state and stirring of the object S into the liquid L is complete.

## Claims

1. A measurement apparatus (1) disposed with respect to a container (105) containing a liquid (L) for stirring an object (S) in the liquid (L), the measurement apparatus (1) comprising:
a memory (40);
output detectors (20) fixed to the container (105), the output detectors (20) being configured to output ultrasonic waves that propagate in the liquid (L) in the container (105) and detect the ultrasonic waves propagated in the liquid (L); and
a controller (50) configured to measure a state of the liquid (L) in the container (105) based on the ultrasonic waves detected by the output detectors (20), wherein
the state of the liquid (L) includes a product state of the liquid (L) in stirring, the controller (50) is configured to obtain reference data in advance as a reference, in an initial state before the start of stirring, regarding the product state of the liquid (L) in a first reference state, the reference data including a parameter of a signal of the ultrasonic wave propagated in the liquid in the first reference state, the reference data including data on ultrasonic waves detected for all of the output detectors,
the controller is configured to store, in the memory, the reference data,
the controller is configured to measure the product state of the liquid based on the reference data and measurement data of the parameter regarding the product state of the liquid (L) in stirring, and
the controller (50) is configured to calculate, as a difference of the measurement data from the reference data, the difference for the parameter that changes between the first reference state and a state during stirring and determine that the stirring of the object (S) with respect to the liquid (L) is complete when the difference is constant over a defined time, wherein
the state of the liquid (L) includes a position of a liquid surface of the liquid (L) in the container (105), and
the controller (50) is configured to measure the position of the liquid surface of the liquid (L) based on detection signals of the ultrasonic waves detected by the output detectors (20).

2. The measurement apparatus (1) according to claim 1, wherein
the controller (50) is configured to calculate a position between one of the output detectors (20) that indicates a first detection signal and another adjacent one of the output detectors (20) that indicates a second detection signal different from the first detection signal as the position of the liquid surface of the liquid (L).

3. The measurement apparatus (1) according to any one of claims 1 to 2, wherein
the state of the liquid (L) includes presence or absence of bubbles (B) or particles, and
the controller (50) is configured to measure the presence or absence of bubbles (B) or particles based on at least one of a positive or negative beginning of a waveform and speed of sound of an ultrasonic wave detected by the output detectors (20).

4. The measurement apparatus (1) according to claim 3, wherein the controller (50) is configured to determine that bubbles (B) are present when the positive or negative beginning of the waveform while the liquid (L) is in use is inverted relative to the positive or negative beginning of a reference waveform while the liquid (L) is in a second reference state.

5. The measurement apparatus (1) according to any one of claims 1 to 4, wherein
the state of the liquid (L) includes density of bubbles (B) or particles, and
the controller (50) is configured to measure the density of bubbles (B) or particles based on the speed of sound of an ultrasonic wave detected by the output detectors (20).

6. The measurement apparatus (1) according to any one of claims 1 to 5, wherein
the output detectors (20) are disposed along an outer surface of the container (105), and
the output detectors (20) are configured to detect a reflected or transmitted wave of the ultrasonic wave output.

7. The measurement apparatus (1) according to any one of claims 1 to 6, wherein
the output detectors (20) include a homogenizer (108) that uses the ultrasonic waves to disintegrate and disperse the object (S) in the liquid (L), and the output detectors (20) detect the ultrasonic waves from the homogenizer (108).

8. The measurement apparatus (1) according to any one of claims 1 to 7, wherein
the controller (50) further measures at least one of the viscosity of the liquid (L) in the container (105), the pressure of the liquid (L) in the container (105), the temperature of the liquid (L) in the container (105), or the appearance of the liquid (L) in the container (105).

9. A measurement method performed by a measurement apparatus (1) according to one of the claims 1 to 8 disposed with respect to a container (105) containing a liquid (L) for stirring an object (S) in the liquid (L), the measurement method comprising: outputting ultrasonic waves that propagate in the liquid (L) in the container (105);
detecting, at a fixed position relative to the container (105), the ultrasonic waves propagated in the liquid (L);
obtaining reference data in advance as a reference, the reference data including data on the ultrasonic waves detected;
measuring a state of the liquid (L) in the container (105) based on the ultrasonic waves detected, wherein the state of the liquid (L) includes a product state of the liquid (L) in stirring,
measuring the product state of the liquid (L) based on the reference data and measurement data of the parameter regarding the product state of the liquid (L) in stirring, the reference data being obtained in an initial state before the start of stirring, regarding the product state of the liquid (L) in a first reference state, the reference data including a parameter of a signal of the ultrasonic wave propagated in the liquid in the first reference state,
calculating, as a difference of the measurement data from the reference data, the difference for the parameter that changes between the first reference state and a state during stirring, and
determining that the stirring of the object (S) with respect to the liquid (L) is complete when the difference is constant over a defined time.

## Patentansprüche

1. Messvorrichtung (1), die in Bezug auf einen Behälter (105) angeordnet ist, der eine Flüssigkeit (L) enthält, zum Rühren eines Objekts (S) in der Flüssigkeit (L), wobei die Messvorrichtung (1) folgende Merkmale aufweist:
einen Speicher (40);
Ausgabedetektoren (20), die an dem Behälter (105) befestigt sind, wobei die Ausgabedetektoren (20) dazu konfiguriert sind, Ultraschallwellen auszugeben, die sich in der Flüssigkeit (L) in dem Behälter (105) ausbreiten, und die Ultraschallwellen zu detektieren, die sich in der Flüssigkeit (L) ausbreiten; und
eine Steuerung (50), die dazu konfiguriert ist, einen Zustand der Flüssigkeit (L) in dem Behälter (105) basierend auf den Ultraschallwellen zu messen, die durch die Ausgabedetektoren (20) detektiert werden, wobei
der Zustand der Flüssigkeit (L) einen Produktzustand der Flüssigkeit (L) beim Rühren beinhaltet,
die Steuerung (50) dazu konfiguriert ist, Referenzdaten im Voraus als eine Referenz in einem Anfangszustand vor dem Beginn des Rührens bezüglich des Produktzustands der Flüssigkeit (L) in einem ersten Referenzzustand zu erhalten, wobei die Referenzdaten einen Parameter eines Signals der Ultraschallwelle beinhalten, die sich in der Flüssigkeit in dem ersten Referenzzustand ausbreitet, wobei die Referenzdaten Daten über Ultraschallwellen beinhalten, die für alle Ausgabedetektoren detektiert werden,
die Steuerung dazu konfiguriert ist, die Referenzdaten in dem Speicher zu speichern,
die Steuerung dazu konfiguriert ist, den Produktzustand der Flüssigkeit basierend auf den Referenzdaten und Messdaten des Parameters bezüglich des Produktzustands der Flüssigkeit (L) beim Rühren zu messen, und
die Steuerung (50) dazu konfiguriert ist, als eine Differenz der Messdaten von den Referenzdaten die Differenz für den Parameter zu berechnen, der sich zwischen dem ersten Referenzzustand und einem Zustand während des Rührens ändert, und zu bestimmen, dass das Rühren des Objekts (S) in Bezug auf die Flüssigkeit (L) abgeschlossen ist, wenn die Differenz über eine definierte Zeit konstant ist, wobei
der Zustand der Flüssigkeit (L) eine Position einer Flüssigkeitsoberfläche der Flüssigkeit (L) in dem Behälter (105) beinhaltet und
die Steuerung (50) dazu konfiguriert ist, die Position der Flüssigkeitsoberfläche der Flüssigkeit (L) basierend auf Detektionssignalen der Ultraschallwellen zu messen, die durch die Ausgabedetektoren (20) detektiert werden.

2. Messvorrichtung (1) gemäß Anspruch 1, wobei
die Steuerung (50) dazu konfiguriert ist, eine Position zwischen einem der Ausgabedetektoren (20), der ein erstes Detektionssignal anzeigt, und einem anderen benachbarten der Ausgabedetektoren (20), der ein zweites Detektionssignal anzeigt, das sich von dem ersten Detektionssignal unterscheidet, als die Position der Flüssigkeitsoberfläche der Flüssigkeit (L) zu berechnen.

3. Messvorrichtung (1) gemäß einem der Ansprüche 1 bis 2, wobei
der Zustand der Flüssigkeit (L) ein Vorhandensein oder Fehlen von Blasen (B) oder Partikeln beinhaltet und
die Steuerung (50) dazu konfiguriert ist, das Vorhandensein oder Fehlen von Blasen (B) oder Partikeln basierend auf zumindest einem von einem positiven oder negativen Beginn einer Wellenform und einer Schallgeschwindigkeit einer Ultraschallwelle zu messen, die durch die Ausgabedetektoren (20) detektiert wird.

4. Messvorrichtung (1) gemäß Anspruch 3, wobei
die Steuerung (50) dazu konfiguriert ist, zu bestimmen, dass Blasen (B) vorhanden sind, wenn der positive oder negative Beginn der Wellenform, während die Flüssigkeit (L) in Verwendung ist, relativ zu dem positiven oder negativen Beginn einer Referenzwellenform, während die Flüssigkeit (L) in einem zweiten Referenzzustand ist, invertiert ist.

5. Messvorrichtung (1) gemäß einem der Ansprüche 1 bis 4, wobei
der Zustand der Flüssigkeit (L) eine Dichte von Blasen (B) oder Partikeln beinhaltet und
die Steuerung (50) dazu konfiguriert ist, die Dichte von Blasen (B) oder Partikeln basierend auf der Schallgeschwindigkeit einer Ultraschallwelle zu messen, die durch die Ausgabedetektoren (20) detektiert wird.

6. Messvorrichtung (1) gemäß einem der Ansprüche 1 bis 5, wobei
die Ausgabedetektoren (20) entlang einer Außenoberfläche des Behälters (105) angeordnet sind und
die Ausgabedetektoren (20) dazu konfiguriert sind, eine reflektierte oder übertragene Welle der Ultraschallwellenausgabe zu detektieren.

7. Messvorrichtung (1) gemäß einem der Ansprüche 1 bis 6, wobei
die Ausgabedetektoren (20) einen Homogenisator (108) beinhalten, der die Ultraschallwellen verwendet, um das Objekt (S) in der Flüssigkeit (L) zu zersetzen und zu dispergieren, und die Ausgabedetektoren (20) die Ultraschallwellen von dem Homogenisator (108) detektieren.

8. Messvorrichtung (1) gemäß einem der Ansprüche 1 bis 7, wobei die Steuerung (50) ferner zumindest eines von der Viskosität der Flüssigkeit (L) in dem Behälter (105), dem Druck der Flüssigkeit (L) in dem Behälter (105), der Temperatur der Flüssigkeit (L) in dem Behälter (105) oder dem Erscheinungsbild der Flüssigkeit (L) in dem Behälter (105) misst.

9. Messverfahren, das durch eine Messvorrichtung (1) gemäß einem der Ansprüche 1 bis 8 durchgeführt wird, die in Bezug auf einen Behälter (105) angeordnet ist, der eine Flüssigkeit (L) enthält, zum Rühren eines Objekts (S) in der Flüssigkeit (L), wobei das Messverfahren folgende Schritte aufweist:
Ausgeben von Ultraschallwellen, die sich in der Flüssigkeit (L) in dem Behälter (105) ausbreiten;
Detektieren der Ultraschallwellen, die sich in der Flüssigkeit (L) ausbreiten, an einer festen Position relativ zu dem Behälter (105);
Erhalten von Referenzdaten im Voraus als eine Referenz, wobei die Referenzdaten Daten über die detektierten Ultraschallwellen beinhalten;
Messen eines Zustands der Flüssigkeit (L) in dem Behälter (105) basierend auf den detektierten Ultraschallwellen, wobei der Zustand der Flüssigkeit (L) einen Produktzustand der Flüssigkeit (L) beim Rühren beinhaltet,
Messen des Produktzustands der Flüssigkeit (L) basierend auf den Referenzdaten und Messdaten des Parameters bezüglich des Produktzustands der Flüssigkeit (L) beim Rühren, wobei die Referenzdaten in einem Anfangszustand vor dem Beginn des Rührens bezüglich des Produktzustands der Flüssigkeit (L) in einem ersten Referenzzustand erhalten werden, wobei die Referenzdaten einen Parameter eines Signals der Ultraschallwelle beinhalten, die sich in der Flüssigkeit in dem ersten Referenzzustand ausbreitet,
Berechnen, als eine Differenz der Messdaten von den Referenzdaten, der Differenz für den Parameter, der sich zwischen dem ersten Referenzzustand und einem Zustand während des Rührens ändert, und
Bestimmen, dass das Rühren des Objekts (S) in Bezug auf die Flüssigkeit (L) abgeschlossen ist, wenn die Differenz über eine definierte Zeit konstant ist.

## Revendications

1. Appareil de mesure (1) disposé par rapport à un récipient (105) contenant un liquide (L) pour agiter un objet (S) dans le liquide (L), l'appareil de mesure (1) comprenant :
une mémoire (40) ;
des détecteurs de sortie (20) fixés au récipient (105), les détecteurs de sortie (20) étant configurés pour émettre des ondes ultrasonores qui se propagent dans le liquide (L) dans le récipient (105) et pour détecter les ondes ultrasonores propagées dans le liquide (L) ; et
un contrôleur (50) configuré pour mesurer un état du liquide (L) dans le récipient (105) sur la base des ondes ultrasonores détectées par les détecteurs de sortie (20), dans lequel
l'état du liquide (L) inclut un état de produit du liquide (L) lors de l'agitation, le contrôleur (50) est configuré pour obtenir des données de référence à l'avance, à titre de référence, dans un état initial avant le début de l'agitation, concernant l'état de produit du liquide (L) dans un premier état de référence, les données de référence incluant un paramètre d'un signal de l'onde ultrasonore propagée dans le liquide dans le premier état de référence, les données de référence incluant des données sur les ondes ultrasonores détectées par l'ensemble des détecteurs de sortie,
le contrôleur est configuré pour stocker, dans la mémoire, les données de référence,
le contrôleur est configuré pour mesurer l'état de produit du liquide sur la base des données de référence et des données de mesure du paramètre concernant l'état de produit du liquide (L) lors de l'agitation, et
le contrôleur (50) est configuré pour calculer, sous forme d'une différence des données de mesure à partir des données de référence, la différence pour le paramètre qui varie entre le premier état de référence et un état pendant l'agitation, et pour déterminer que l'agitation de l'objet (S) par rapport au liquide (L) est terminée lorsque la différence reste constante pendant une durée définie, dans lequel
l'état du liquide (L) inclut une position d'une surface de liquide du liquide (L) dans le récipient (105), et
le contrôleur (50) est configuré pour mesurer la position de la surface de liquide du liquide (L) sur la base des signaux de détection des ondes ultrasonores détectées par les détecteurs de sortie (20).

2. Appareil de mesure (1) selon la revendication 1, dans lequel
le contrôleur (50) est configuré pour calculer la position entre l'un des détecteurs de sortie (20), qui indique un premier signal de détection, et un autre des détecteurs de sortie (20) adjacent, qui indique un deuxième signal de détection différent du premier signal de détection, comme la position de la surface de liquide du liquide (L).

3. Appareil de mesure (1) selon l'une quelconque des revendications 1 à 2, dans lequel
l'état du liquide (L) inclut la présence ou l'absence de bulles (B) ou de particules, et
le contrôleur (50) est configuré pour mesurer la présence ou l'absence de bulles (B) ou de particules sur la base d'au moins l'un d'un début positif ou négatif d'une forme d'onde et la vitesse du son d'une onde ultrasonore détectée par les détecteurs de sortie (20).

4. Appareil de mesure (1) selon la revendication 3, dans lequel le contrôleur (50) est configuré pour déterminer la présence de bulles (B) lorsque le début positif ou négatif de la forme d'onde, pendant que le liquide (L) est en cours d'utilisation, est inversé par rapport au début positif ou négatif d'une forme d'onde de référence, pendant que le liquide (L) se trouve dans un deuxième état de référence.

5. Appareil de mesure (1) selon l'une quelconque revendications 1 à 4, dans lequel
l'état du liquide (L) inclut la densité des bulles (B) ou des particules, et
le contrôleur (50) est configuré pour mesurer la densité des bulles (B) ou des particules sur la base de la vitesse du son d'une onde ultrasonore détectée par les détecteurs de sortie (20).

6. Appareil de mesure (1) selon l'une quelconque des revendications 1 à 5, dans lequel
les détecteurs de sortie (20) sont disposés le long d'une surface extérieure du conteneur (105), et
les détecteurs de sortie (20) sont configurés pour détecter une onde réfléchie ou transmise de l'émission de l'onde ultrasonore.

7. Appareil de mesure (1) selon l'une quelconque des revendications 1 à 6, dans lequel
les détecteurs de sortie (20) incluent un homogénéisateur (108) qui utilise les ondes ultrasonores pour désintégrer et disperser l'objet (S) dans le liquide (L), et les détecteurs de sortie (20) détectent les ondes ultrasonores provenant de l'homogénéisateur (108).

8. Appareil de mesure (1) selon l'une quelconque des revendications 1 à 7, dans lequel
le contrôleur (50) mesure en outre au moins l'une de la viscosité du liquide (L) dans le récipient (105), de la pression du liquide (L) dans le récipient (105), de la température du liquide (L) dans le récipient (105) ou l'apparence du liquide (L) dans le récipient (105).

9. Procédé de mesure mis en œuvre par un appareil de mesure (1) selon l'une des revendications 1 à 8, disposé par rapport à un récipient (105) contenant un liquide (L) pour agiter un objet (S) dans le liquide (L), le procédé de mesure comprenant : l'émission d'ondes ultrasonores qui se propagent dans le liquide (L) dans le récipient (105) ;
la détection, à une position fixe par rapport au récipient (105), des ondes ultrasonores se propagées dans le liquide (L) ;
l'obtention des données de référence en avance comme une référence, les données de référence incluant des données sur les ondes ultrasonores détectées ;
la mesure d'un état du liquide (L) dans le récipient (105) sur la base des ondes ultrasonores détectées, dans lequel l'état du liquide (L) inclut un état de produit du liquide (L) lors de l'agitation,
la mesure de l'état de produit du liquide (L) sur la base des données de référence et des données de mesure du paramètre concernant l'état de produit du liquide (L) lors de l'agitation, les données de référence étant obtenues dans un état initial avant le début de l'agitation, concernant l'état de produit du liquide (L) dans un premier état de référence, les données de référence incluant un paramètre d'un signal de l'onde ultrasonore se propagée dans le liquide dans le premier état de référence,
le calcul, sous forme d'une différence entre les données de mesure et les données de référence, la différence pour le paramètre qui varie entre le premier état de référence et un état pendant l'agitation, et
la détermination que l'agitation de l'objet (S) par rapport au liquide (L) est terminée lorsque la différence reste constante pendant une durée définie.
